# EUROPEAN PATENT SPECIFICATION

(11) **EP 2 468 123 B1**
(45) Date of publication and mention of the grant of the patent: **25.06.2014**
(21) Application number: 11195751.0
(22) Date of filing: 27.12.2011
(51) Int. Cl.: A41H 43/04, B29C 65/52, D06H 5/00, A41D 27/24

(54) **Cloth bonding apparatus**
Vorrichtung zum Verbinden vom Stoff
Appareil de liaison de tissus

(30) Priority: 27.12.2010 JP 2010289462
(43) Date of publication of application: 27.06.2012
(73) Proprietor: Brother Kogyo Kabushiki Kaisha, Nagoya-shi, Aichi 467-8561 (JP)
(72) Inventor: Minagawa, Yuichiro, Nagoya-shi, Aichi 467-8562 (JP); Umeda, Kazutoshi, Nagoya-shi, Aichi 467-8562 (JP); Nishimura, Kazuto, Nagoya-shi, Aichi 467-8562 (JP); Nemoto, Yoshimitsu, Nagoya-shi, Aichi 467-8562 (JP); Yamaura, Hiroki, Nagoya-shi, Aichi 467-8562 (JP); Iwakoshi, Hiroyasu, Nagoya-shi, Aichi 467-8562 (JP); Enya, Tetsuji, Nagoya-shi, Aichi 467-8562 (JP); Horibe, Yoshihiko, Nagoya-shi, Aichi 467-8562 (JP)
(74) Representative: Prüfer & Partner GbR European Patent Attorneys

(56) References cited:
- EP-A1- 2 216 163
- EP-A1- 2 233 279
- EP-A1- 2 255 956

## Description

The present invention relates to a cloth bonding apparatus that switches a position of a cloth feed portion in accordance with an operation status.

A cloth bonding apparatus discharges a heated liquid adhesive from a nozzle. The adhesive attaches to a cloth. An operator overlays a cloth to be bonded on the cloth to which the adhesive is attached. The cloth bonding apparatus presses both the cloths, and bonds the cloths. By bonding the cloths with the adhesive, it is possible to eliminate unevenness that occurs on a cloth surface in the case of sewing with a thread.

For example, a cloth bonding apparatus described in Japanese Laid-Open Patent Publication No. 2010-222140 is provided with a belt that is stretched between two rollers. One of the rollers is provided in proximity to and underneath a nozzle. The other roller is provided on a downstream side with respect to the nozzle, in a feed direction of a cloth. The cloth is disposed on the belt. The rollers rotate due to the driving of a motor. In accordance with the rotation of the rollers, the belt feeds the cloth that is disposed on the belt. By feeding the cloth, the cloth bonding apparatus can apply the adhesive to the cloth and can perform bonding of the cloths.

When the bonding apparatus described in the above-described Japanese Laid-Open Patent publication No. 2010-222140 feeds the cloth and applies the adhesive, the adhesive that is attached to the nozzle and that docs not contact the cloth is present along the shape of the nozzle. When an operator applies the adhesive to the cloth, sometimes the operator temporarily stops the feeding of the cloth, then re-starts the feeding of the cloth and applies the adhesive to the cloth. When the cloth bonding apparatus temporarily stops the feeding of the cloth, the adhesive that is present along the shape of the nozzle collects on the cloth underneath the nozzle and attaches to the cloth (this is referred to as a "pooled adhesive section"). When the cloth bonding apparatus feeds the cloth again, an amount of adhesive that has been attached to the cloth may become uneven between the pooled adhesive section and a section other than the pooled adhesive section.

EP 2 255 956 A1 discloses a generic cloth bonding apparatus having the features of the preamble of claim 1.

It is an object of the present invention to provide a cloth bonding apparatus that is capable of inhibiting an uneven amount of adhesive from being attached to a cloth even when feeding of the cloth is temporarily stopped.

A cloth bonding apparatus of the present invention includes a nozzle, a first feed portion, a second feed portion, a supply portion, an input portion, a position movement portion, and a position movement control portion. An adhesive is dischargeable onto a cloth through the nozzle. The first feed portion is adapted to feed the cloth and is disposed on a downstream side with respect to the nozzle in a feed direction of the cloth, The second feed portion is adapted to feed the cloth and is disposed on a first surface side of the cloth and in a position facing the nozzle such that the cloth is disposed between the second feed portion and the nozzle, the first surface side being opposite to a second surface side of the cloth on which the first feed portion is disposed with respect to the cloth. The supply portion is adapted to supply the adhesive to the nozzle. The input portion is adapted to receive a driving command and a driving stop command for the supply portion, and a feed command and a feed stop command for the cloth. The position movement portion moves the second feed portion between a first position at which the cloth is clamped between the second feed portion and the nozzle, and a second position at which the second feed portion is further separated from the nozzle than in the first position. The position movement control portion moves the second feed portion from the first position to the second position by controlling driving of the position movement portion, in a case where the input portion receives the driving stop command and the feed stop command.

In the above-described cloth bonding apparatus, in a case where the input portion receives the driving stop command for the supply portion and the feed stop command for the cloth, the position movement control portion moves the second feed portion, which is in the first position at which the cloth is clamped between the second feed portion and the nozzle, to the second position at which the second feed portion is separated further from the nozzle than in the first position. By the second feed portion moving to the second position, a gap between the cloth and the nozzle becomes wider. In other words, the cloth bonding apparatus provides a gap between the cloth and the nozzle in a case where a bonding operation is stopped. As a result, the adhesive that is attached to a rear portion of the nozzle and that is not attached to the cloth moves to a portion of the nozzle that comes into contact with the cloth, Thus, the cloth bonding apparatus can inhibit the adhesive that is attached to the rear of the nozzle from attaching to the cloth and forming a pooled adhesive section, and can thus inhibit an amount of the adhesive that is attached to the cloth from being uneven.

In the cloth bonding apparatus, the position movement control portion may move the second feed portion from the second position to the first position by controlling the driving of the position movement portion in a case where the input portion receives the driving command and the feed command. In this case, when the second feed portion moves to the first position, the second feed portion and the nozzle clamp the cloth. Thus, the cloth bonding apparatus clamps the cloth using the second feed portion and the nozzle at the time of the bonding operation, and can apply the adhesive to the cloth and feed the cloth.

The cloth bonding apparatus may further include a position setting portion that sets the first position and the second position. In this case, the cloth bonding apparatus can adjust the position of the second feed portion and supply the adhesive uniformly, regardless of a thickness of the cloth.

The cloth bonding apparatus may further include a position storage portion that stores a plurality of the first positions set by the position setting portion, and a switching portion that switches from one of the first positions that is currently selected from among the plurality of first positions stored in the position storage portion to another of the first positions. Then, in a case where the switching portion switches the first position, the position movement control portion may move the second feed portion to the first position switched to by the switching portion, by controlling the driving of the position movement portion. In this case, the cloth bonding apparatus can change the first position of the second feed portion using the switching portion in accordance with a change in the thickness of the cloth being bonded. Thus, the cloth bonding apparatus can adjust the gap between the cloth and the nozzle in accordance with the change in the thickness of the cloth being bonded and can thus make uniform the adhesive that is applied to the cloth.

The cloth bonding apparatus may further include a measurement portion that measures an elapsed time period from when the input portion receives the driving stop command and the feed stop command, and a time setting portion that sets a wait time from when the input portion receives the driving stop command and the feed stop command to when the position movement portion moves the second feed portion from the first position to the second position. Then, when the elapsed time period has reached the wait time, the position movement control portion may move the second feed portion from the first position to the second position by controlling the position movement portion. In this case, the wait time until the second feed portion is moved can be set in accordance with an amount of the adhesive that is discharged from the nozzle, and thus the cloth bonding apparatus can uniformly apply the adhesive to the cloth,

In the cloth bonding apparatus, the first feed portion may be a cylindrically shaped first roller, and the second feed portion may include a first pulley, a second pulley and a belt. The first pulley may be dispose in a position facing the first roller such that the cloth is disposed between the first pulley and the first roller. The second pulley may be disposed in one of a position facing the nozzle such that the cloth is disposed between the second pulley and the nozzle, and a position that is at least on an upstream side in the feed direction of the cloth from the position facing the nozzle such that the cloth is disposed between the second pulley and the nozzle. The belt may be stretched between the first pulley and the second pulley. Then, the position movement portion may move the position of the second pulley between the first position in which the cloth is clamped between the belt and the nozzle, and the second position in which the belt is further separated from the nozzle than in the first position. In this case, the cloth bonding apparatus can smoothly feed the cloth on the belt from the position facing the nozzle to the position facing the first roller.

In the cloth bonding apparatus, the second feed portion may further include an arm portion that rotatably supports the first pulley and the second pulley and that is swingable about a rotational axis of the first pulley. Then, the position movement portion may include a motor and an eccentric cam that is provided on an output shaft of the motor and that contacts the arm portion. The motor may move the second pulley between the first position and the second position by swinging the arm portion that contacts the eccentric cam. In this case, the cloth bonding apparatus can easily move the second pulley between the first position and the second position, and can easily adjust the first position and the second position using the motor. As a result, operational efficiency of the cloth bonding apparatus can be improved.

In the cloth bonding apparatus, the second feed portion may further include a third pulley over which the belt is stretched. Then, the third pulley may include flange portions on both end portions in an axial direction and may be positioned lower than a plane that includes the rotational axis of the first pulley and a rotational axis of the second pulley. The flange portions may be separated from the cloth. In this case, the cloth bonding apparatus can inhibit the stretched belt from slipping off the third pulley and inhibit the flange portions from coming into contact with the cloth.

### BRIEF DESCRIPTION OF THE DRAWINGS

Exemplary embodiments of the present disclosure will be described below in detail with reference to the accompanying drawings in which:
FIG. 1 is a perspective view of an entire cloth bonding apparatus 1;
FIG. 2 is a perspective view of a bonding device 2;
FIG. 3 is a front view of the bonding device 2;
FIG. 4 is a left side view of the bonding device 2;
FIG. 5 is a perspective view of an internal configuration of the bonding device 2;
FIG. 6 is a partially enlarged cross-sectional view of a storage chamber 18, a pump casing 14 and a support portion 16;
FIG. 7 is a perspective view of a vicinity of a lower feed portion 37;
FIG. 8 is a left side view of the vicinity of the lower feed portion 37;
FIG. 9 is a front view of the vicinity of the lower feed portion 37;
FIG. 10 is a left side view of the vicinity of the lower feed portion 37 that is in a first position;
FIG. 11 is a left side view of the vicinity of the lower feed portion 37 that is in a second position;
FIG. 12 is a block diagram showing an electrical configuration of the cloth bonding apparatus 1;
FIG. 13 is a flowchart of bonding processing;
FIG. 14 is a flowchart of bonding processing;
FIG. 15 is a perspective view of a vicinity of a lower feed portion 38 according to a second embodiment;
FIG. 16 is another perspective view of the vicinity of the lower feed portion 38 according to the second embodiment;
FIG. 17 is a perspective view of a support arm 160 according to the second embodiment;
FIG. 18 is a partially enlarged perspective view of a rotating shaft 131 according to the second embodiment;
FIG. 19 is a right side view of the vicinity of the lower feed portion 38 according to the second embodiment, which is in a first position;
FIG. 20 is a right side view of the vicinity of the lower feed portion 38 according to the second embodiment, which is in a second position;
FIG. 21 is block diagram showing an electrical configuration of the cloth bonding apparatus 1 according to the second embodiment; and
FIG. 22 is a perspective view of a vicinity of a third motor 93 according to a modified example.

### DETAILED DESCRIPTION OF EXEMPLARY EMBODIMENTS

Embodiments of the present invention will be described below with reference to the drawings.

### First embodiment

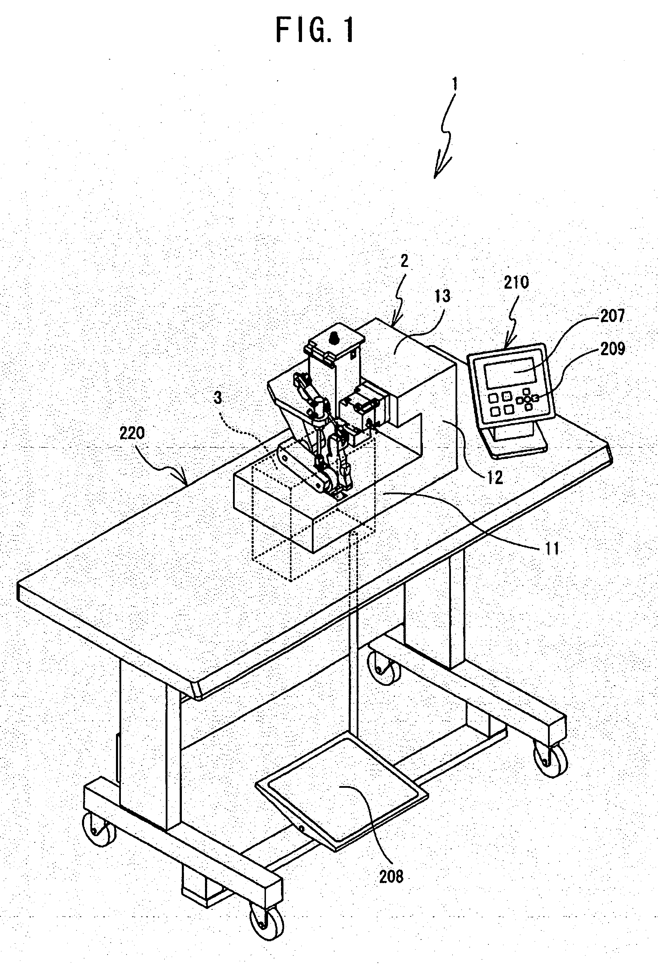

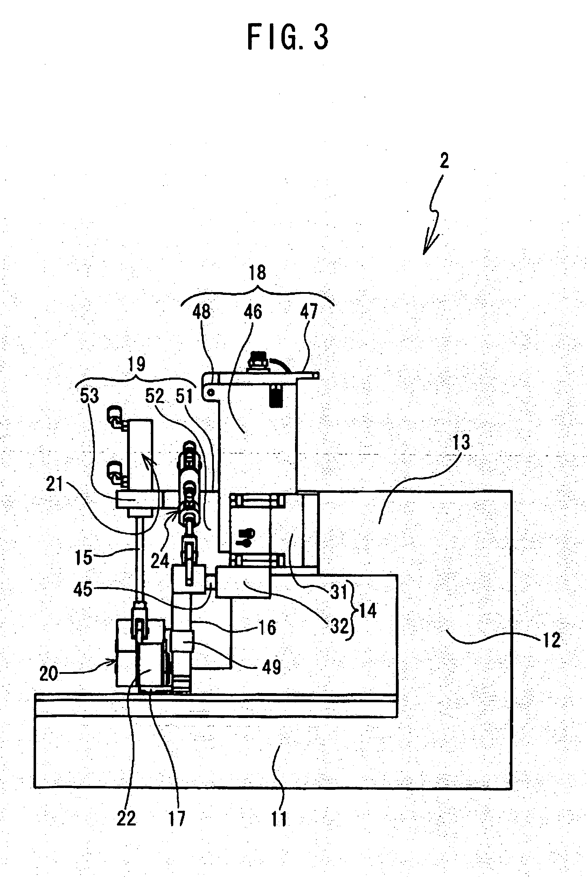

A configuration of a cloth bonding apparatus 1 according to a first embodiment will be described with reference to FIG. 1 to FIG. 4. The upper side, the lower side, the right side, the left side, the front side and the back side of FIG. 3 respectively correspond to the upper side, the lower side, the right side, the left side, the front side and the rear side of a bonding device 2.

An overall configuration of the cloth bonding apparatus I will be described with reference to FIG. 1. The cloth bonding apparatus 1 is provided with the bonding device 2, a control box 3, and an operation panel 210. The bonding device 2 applies an adhesive between two layers of cloth that are arranged facing each other, and then presses and feeds the cloth. The two layers of cloth are bonded to each other by undergoing the above-described operation of the bonding device 2. The bonding device 2 will be described in more detail later.

The bonding device 2 is fixed to an upper side of a table 220. The table 220 is provided with the operation panel 210, on the right side of the bonding device 2. The operation panel 210 includes a liquid crystal display portion 207 and a plurality of keys 209. The liquid crystal display portion 207 displays a variety of information, and the keys 209 receive various inputs. By operating the keys 209 while viewing the liquid crystal display portion 207, an operator sets various operations of the bonding device 2.

A pedal 208, which may be used to adjust a feed speed of the cloth, is provided underneath the table 220. The control box 3 is provided above the pedal 208 and on a rear surface of the table 220. The control box 3 stores a control board that controls the whole of thc cloth bonding apparatus 1.

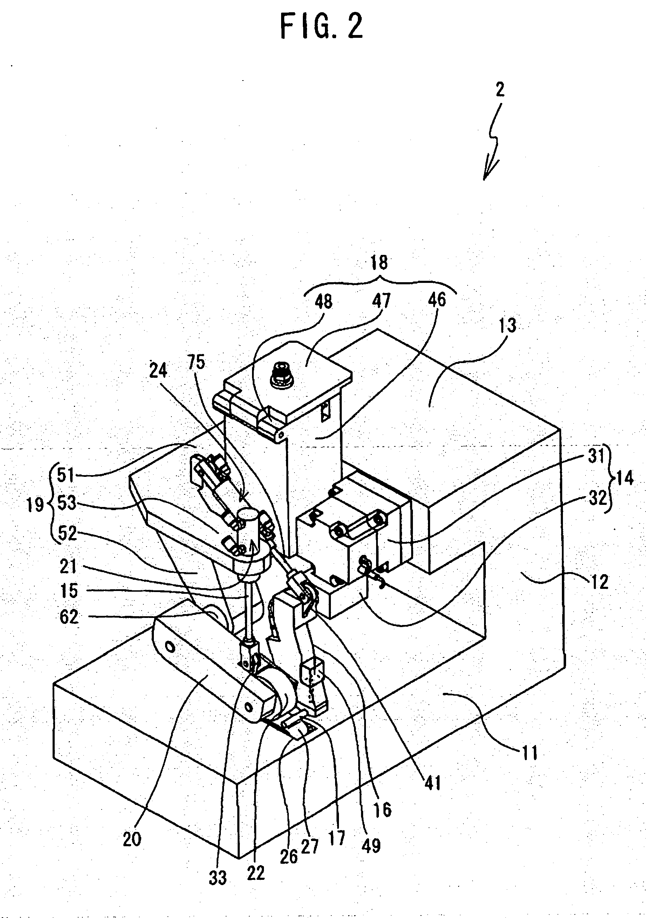

A configuration of the bonding device 2 will be described with reference to FIG. 2 to FIG 4. The bonding device 2 is provided with a bed portion 11, a pillar portion 12 and an arm portion 13, The bed portion 11 has a substantially rectangular parallelepiped shape. The pillar portion 12 extends upwardly from the right end of the bed portion 11. The arm portion 13 is connected to the upper end of the pillar portion 12, and projects toward the left from a left side face of the pillar portion 12.

A left end portion of the arm portion 13 supports a pump casing 14, a storage chamber 18 and a beam portion 19, in that order starting from the front.

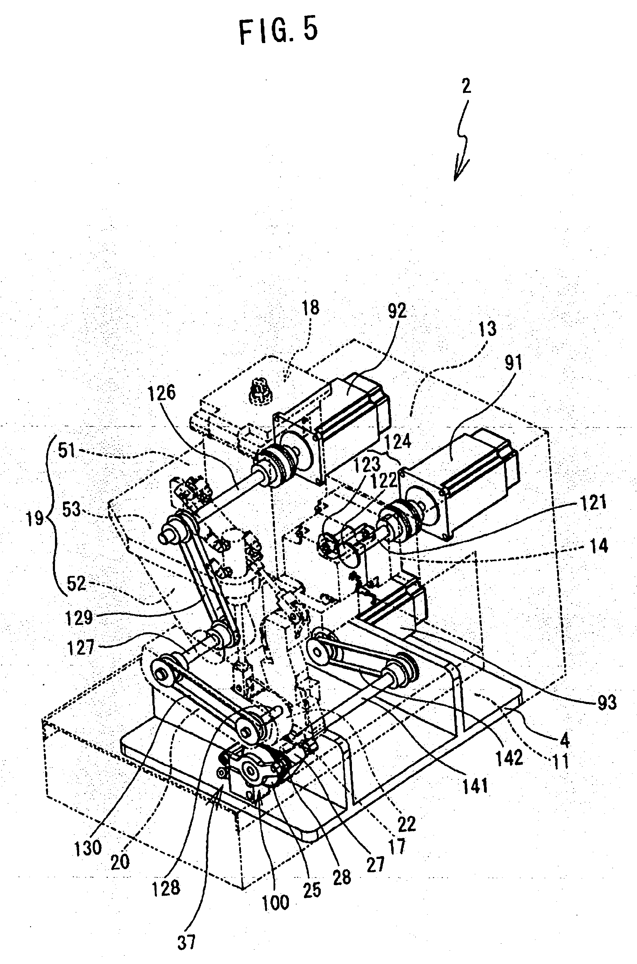

The pump casing 14 will be described. The pump casing 14 includes a first pump casing 31 and a second pump casing 32. The first pump casing 31 has a substantially cubic shape. The first pump casing 31 is fixed to the left side face of the arm portion 13. A gear pump 124 (refer to FIG. 5) and the like are provided inside the first pump casing 31. The gear pump 124 supplies an appropriate amount of adhesive to a nozzle 17 at a high level of accuracy. The second pump casing 32 has a substantially cubic shape. The second pump casing 32 extends downward from a lower left end face of the first pump casing 31.

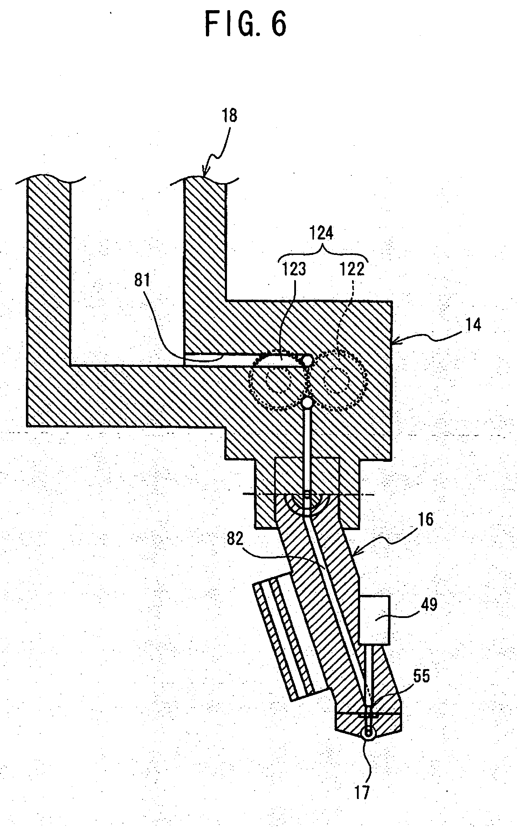

A shaft portion 45 (refer to FIG. 3) is provided on the left side of the second pump casing 32. The shaft portion 45 is connected to the right side of an upper edge portion of a support portion 16 such that the support portion 16 is swingably supported. The pump casing 14 includes a supply passage 81 (refer to FIG. 6). The supply passage 81 supplies the adhesive from the storage chamber 18 to the gear pump 124.

As shown in FIG. 2 and FIG. 3, the support portion 16 has a substantially rectangular parallelepiped shape. A slight gap is present between a lower edge portion of the support portion 16 and the bed portion 11. A supply passage 82 (refer to FIG. 6) is provided inside the support portion 16. The supply passage 82 supplies the adhesive from the pump casing 14 to the nozzle 17. The nozzle 17 is provided on the lower end portion of the support portion 16. The nozzle 17 extends from the support portion 16 to the left side along the cloth. A drive transmission portion 41 is provided on the upper end portion of the support portion 16. The drive transmission portion 41 supports a lower end portion of a movable portion 75 of a second air cylinder 24.

The second air cylinder 24 has an air inlet. Although not shown in the drawings, an intake/exhaust hose is connected to the air inlet. The cloth bonding apparatus 1 controls the intake and exhaust of compressed air to the air inlet. A position of a piston, which is inside a main body of the second air cylinder 24, moves in accordance with the control of the air intake and exhaust. The movable portion 75 is connected to the piston. When the piston moves, the movable portion 75 moves in the front-rear direction. When the movable portion 75 of the second air cylinder 24 moves in the front-rear direction, the support portion 16 swings in the front-rear direction with the shaft portion 45 as a center axis. In accordance with the swinging of the support portion 16, the nozzle 17 moves between a position for performing a cloth bonding operation and a position for performing maintenance.

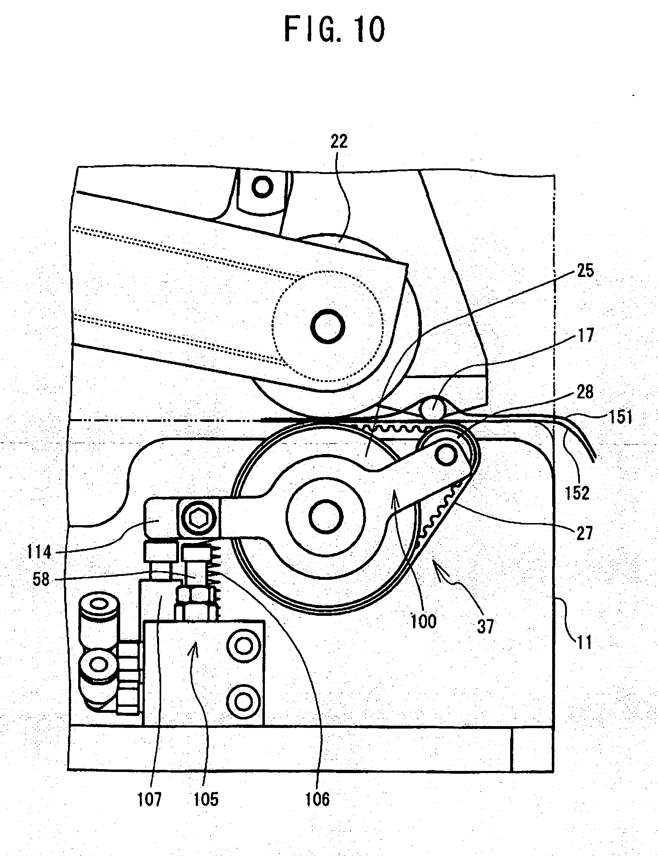

The nozzle 17 is cylindrically shaped. A discharge outlet (not shown in the drawings), through which the adhesive is dischargeable, is provided on the lower side of the nozzle 17. When the operator performs the cloth bonding operation, the discharge outlet faces the bed portion 11. The nozzle 17 is positioned between an upper cloth 151 (refer to FIG. 10) and a lower cloth 152 (refer to FIG. 10). The gear pump 124 supplies the adhesive to the nozzle 17 via the supply passage 82 inside the support portion 16. The nozzle 17 discharges the adhesive from the discharge outlet. The adhesive attaches to the surface of the lower cloth 152 that is positioned underneath the nozzle 17.

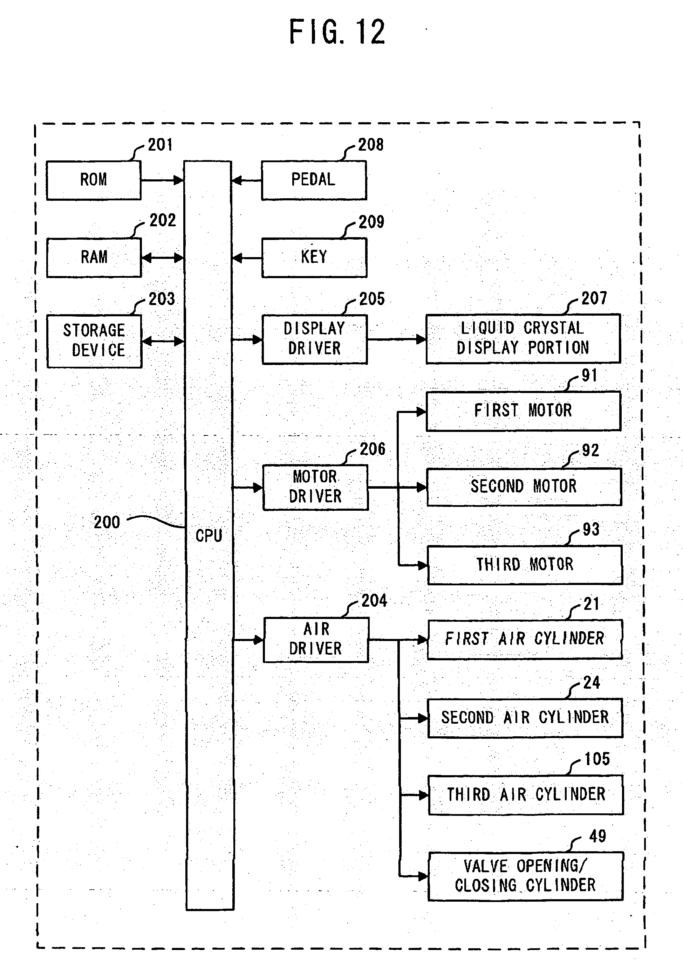

As shown in FIG. 2, FIG. 3 and FIG. 6, a valve opening/closing cylinder 49 is provided on the front side of the support portion 16. The valve opening/closing cylinder 49 opens and closes a valve 55 (refer to FIG. 6) that may be used to block the supply passage 82 (refer to FIG. 6). A CPU 200 (refer to FIG. 12) inside the control box 3 controls operations of the valve opening/closing cylinder 49.

As shown in FIG. 2 and FIG. 3, the storage chamber 18 has a substantially rectangular parallelepiped shape. The storage chamber 18 extends upward from the left side of the arm portion 13 and a rear side portion of the pump casing 14. The storage chamber 18 includes a main body 46, a lid portion 47 and a lid shaft portion 48. The main body 46 has a bottomed tubular shape, of which an upper portion is open. The lid portion 47 covers opening provided in the upper portion of the main body 46. The lid shaft portion 48 is provided on the upper end of the main body 46. The lid shaft portion 48 supports the lid portion 47 such that the lid portion 47 can be opened and closed. The storage chamber 18 stores a hot-melt adhesive (not shown in the drawings) in the main body 46. The cloth bonding apparatus 1 supplies the adhesive stored in the storage chamber 18 to the nozzle 17 via the gear pump 124 as necessary. The hot-melt adhesive liquefies when it is heated to a predetermined temperature, and it solidifies at a temperature lower than the predetermined temperature.

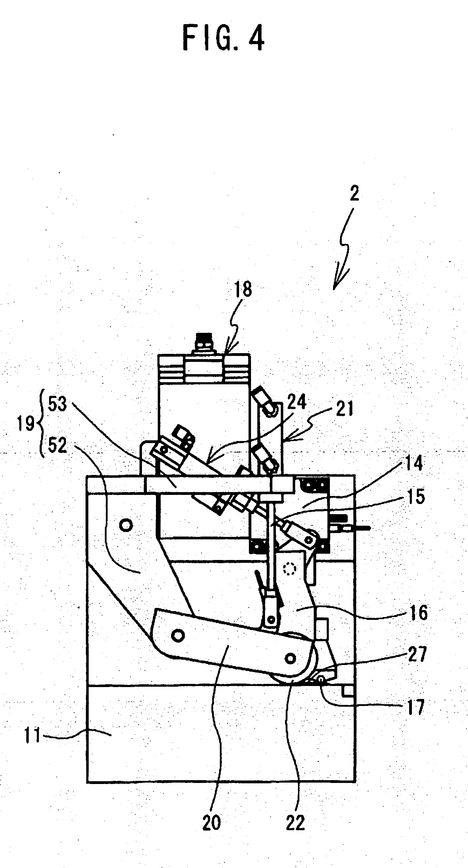

As shown in FIG. 2, the beam portion 19 includes a body portion 51, a cylinder support portion 53 and a column portion 52. The body portion 51 extends in a horizontal direction to the left from a left rear end portion of the arm portion 13. The cylinder support portion 53 is plate-shaped and extends in the horizontal direction toward the front from a left end portion of the body portion 51. As shown in FIG. 2 and FIG. 4, the column portion 52 extends diagonally downward toward the front from the body portion 51, at an angle of approximately 45 degrees from the horizontal plane. A lower end portion of the column portion 52 is separated from the bed portion 11.

As shown in FIG. 2, a main body of a first air cylinder 21 is provided on the front leading end of the cylinder support portion 53. The first air cylinder 21 has an air inlet. Although not shown in the drawings, an intake/exhaust hose is connected to the air inlet. The cloth bonding apparatus 1 controls the intake and exhaust of compressed air to the air inlet. A position of a piston, which is inside the main body of the first air cylinder 21, moves in accordance with the control of the air intake and exhaust. A movable portion 15 is connected to the piston. When the piston moves, the movable portion 15 moves in the up-down direction. The column portion 52 includes a shaft portion 62 that extends in the left-right direction from a left side of a lower end portion of the column portion 52. The shaft portion 62 supports a rear end portion of a roller holding portion 20. The roller holding portion 20 is swingable about the shaft portion 62 such that a front end portion of the roller holding portion 20 swings in the up-down direction. The body portion 51 includes the second air cylinder 24 on the right side of the cylinder support portion 53. The second air cylinder 24 switches a position of the support portion 16.

The roller holding portion 20 will be described. The front end portion of the roller holding portion 20 rotatably supports a cylindrical first roller 22. The first roller 22 is positioned in the vicinity of the rear of the nozzle 17 that extends from the support portion 16.

The roller holding portion 20 has a shaft support portion 33 that is slightly to the front of the center of an upper surface of the roller holding portion 20. The shaft support portion 33 is connected to a lower end portion of the movable portion 15 of the first air cylinder 21.

As shown in FIG. 2, the bed portion 11 has a hole 26 that extends from a section below the first roller 22 to a section below the nozzle 17. Part of a belt 27 that is inside the bed portion 11 protrudes slightly upward from the hole 26. The belt 27 feeds the cloth from the front to the rear.

When the piston of the first air cylinder 21 moves, a gap between the first roller 22 and the belt 27 changes. As shown in FIG. 4, when the movable portion 15 has moved downward, the roller holding portion 20 is tilted diagonally downward and to the front. The gap between the first roller 22 and the belt 27 is small. When the movable portion 15 has moved upward, the roller holding portion 20 is substantially horizontal. The gap between the first roller 22 and the belt 27 is larger.

An internal configuration of the bonding device 2 will be described with reference to FIG. 5. The bonding device 2 includes a first motor 91, a second motor 92, a third motor 93, a lower feed portion 37 and the like in its interior. The first motor 91 drives the gear pump 124 by transmitting a rotational driving force to the gear pump 124 via a rotating shaft 121. The gear pump 124 includes a drive gear 122 and a driven gear 123. The drive gear 122 is fixed to a left end portion of the rotating shaft 121. The drive gear 122 rotates along with the rotating shaft 121. The driven gear 123 meshes with the drive gear 122. The first motor 91 is positioned inside the arm portion 13 and on the right side of a portion where the pump casing 14 is connected to the arm portion 13. The rotating shaft 121 extends, inside the pump casing 14, to the left from a rotating shaft of the first motor 91. The drive gear 122 and the driven gear 123 supply an appropriate amount of the adhesive to the nozzle 17.

The second motor 92 drives the first roller 22 by transmitting a rotational driving force to the first roller 22 via rotating shafts 126 to 128 and belts 129 and 130. The second motor 92 is positioned inside the arm portion 13 and on the right side of a portion where the beam portion 19 is connected to the arm portion 13.

The rotating shaft 126 extends to the left from a rotating shaft of the second motor 92, and penetrates inside the body portion 51. A left end portion of the rotating shaft 126 is positioned inside the column portion 52. The left end portion of the rotating shaft 126 supports a pulley. A right end portion of the rotating shaft 127 extends into the lower end portion of the column portion 52. A left end portion of the rotating shaft 127 extends into the rear end portion of the roller holding portion 20. The right end portion and the left end portion of the rotating shaft 127 respectively support pulleys. The rotating shaft 128 is a rotating shaft of the first roller 22. A left end portion of the rotating shaft 128 extends into the front end portion of the roller holding portion 20, and supports a pulley. A right end portion of the rotating shaft 128 projects from the front end portion of the roller holding portion 20, and supports the first roller 22. The belt 129 is stretched between the pulley of the left end portion of the rotating shaft 126 and the pulley of the right end portion of the rotating shaft 127 inside the column portion 52. The belt 130 is stretched between the pulley of the left end portion of the rotating shaft 127 and the pulley of the left end portion of the rotating shaft 128 inside the roller holding portion 20. The first roller 22 rotates due to the rotation of the second motor 92.

The third motor 93 is provided on the right side inside the bed portion 11. The third motor 93 rotates a first pulley 25 by transmitting a rotational driving force to the first pulley 25 via a rotating shaft 141 and a belt 142. The rotating shaft 141 is a rotating shaft of the first pulley 25. The rotating shaft 141 extends to the right inside the bed portion 11. A right end portion of the rotating shaft 141 supports a pulley. A support bed 4 is provided inside the bed portion 11. The support bed 4 rotatably supports the rotating shaft 141. The belt 142 is stretched between a pulley of a rotating shaft of the third motor 93 and the pulley of the right end portion of the rotating shaft 141 inside the bed portion 11. The first pulley 25 rotates due to the rotation of the third motor 93.

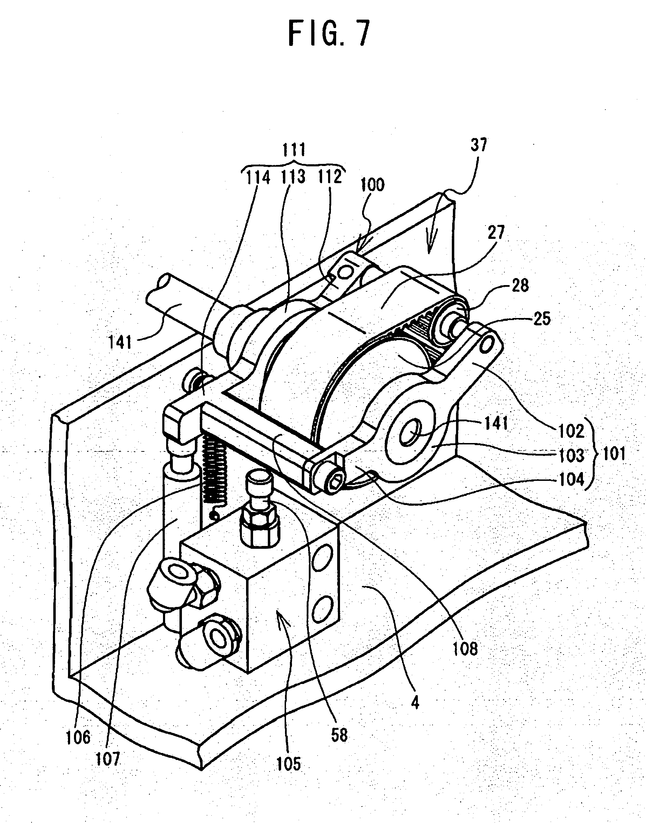

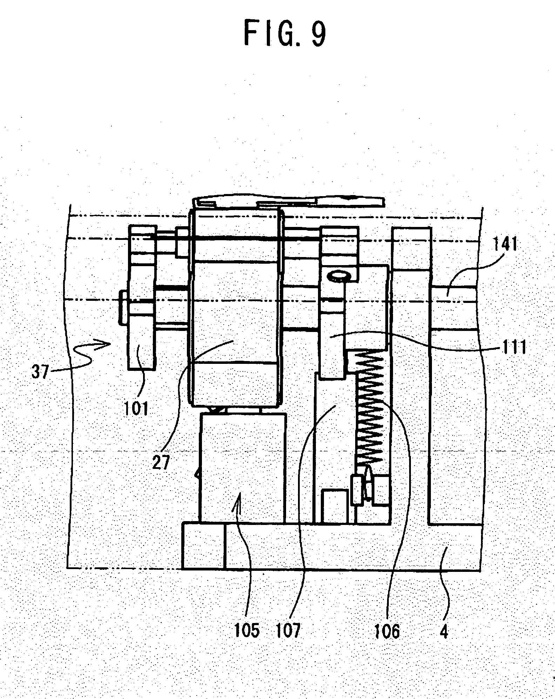

The lower feed portion 37 will be described with reference to FIG. 7 to FIG. 9. The upper right, the lower left, the upper left, and the lower right of FIG. 7 respectively correspond to the front side, the rear side, the right side and the left side of the lower feed portion 37. The lower feed portion 37 includes the first pulley 25, a second pulley 28, a pulley support portion 100, the belt 27 and a spring 106. The pulley support portion 100 rotatably supports the second pulley 28. The belt 27 is a toothed belt. The first pulley 25 and the second pulley 28 arc cylindrically shaped. The first pulley 25 is provided in a position facing the first roller 22 such that the cloth is disposed between the first pulley 25 and the first roller 22. In other words, the first pulley 25 is positioned below the first roller 22. The second pulley 28 is provided in a position facing the nozzle 17 such that the cloth is disposed between the second pulley 28 and the nozzle 17, or in a position at least on an upstream side in the feed direction of the cloth from the position facing the nozzle 17. In the present embodiment, the second pulley 28 is provided diagonally to the front of and below the nozzle 17.

As shown in FIG. 7, the pulley support portion 100 includes a plate-shaped left side plate 101, a plate-shaped right side plate 111 and a link portion 108. The left side plate 101 is on the left side of the first pulley 25 and the second pulley 28. The right side plate 111 is on the right side of the first pulley 25 and the second pulley 28. The link portion 108 links the left side plate 101 and the right side plate 111.

The left side plate 101 includes a first arm portion 102, a ring portion 103 and a second arm portion 104. The circular plate-shaped ring portion 103 is disposed in parallel to a left end face of the first pulley 25. A center of the ring portion 103 is in a same position as a center of a rotational axis of the first pulley 25. A hole is provided in a central section of the ring portion 103. The rotating shaft 141 of the first pulley 25 is inserted through the hole. The second arm portion 104 extends in a horizontal direction at the rear of the ring portion 103. The first arm portion 102 extends diagonally to the front of the ring portion 103, extending upward at an approximately 45 degree angle.

The right side plate 111 has substantially the same shape as the left side plate 101. The right side plate 111 includes a third arm portion 112, a ring portion 113 and a fourth arm portion 114. A length of the fourth arm portion 114 in the front-rear direction is slightly longer than a length of the second arm portion 104 in the front-rear direction. A hole is provided in a central section of the ring portion 113. The rotating shaft 141 of the first pulley 25 is inserted through the hole.

The first arm portion 102 and the third arm portion 112 each have a hole in a front end portion. A rotating shaft of the second pulley 28 is inserted through the holes. The first arm portion 102 and the third arm portion 112 rotatably support the second pulley 28. The link portion 108 extends to the right from a rear end of the second arm portion 104 and connects to the fourth arm portion 114.

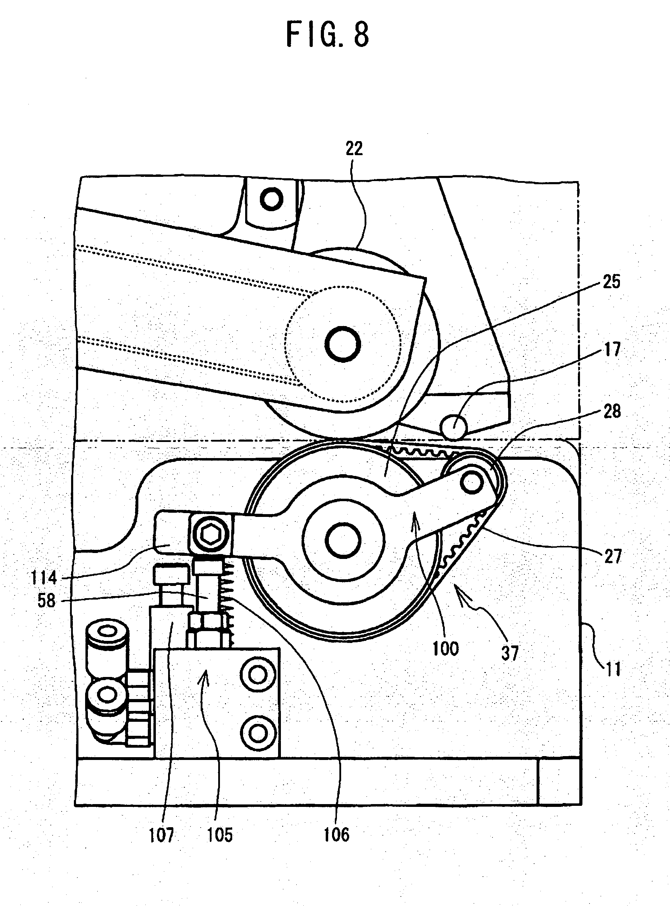

As shown in FIG. 7 and FIG. 8, the belt 27 is stretched between the first pulley 25 and the second pulley 28. The belt 27 rotates due to the rotation of the first pulley 25.

A third air cylinder 105 is provided below the link portion 108. The third air cylinder 105 has an air inlet. Although not shown in the drawings, an intake/exhaust hose is connected to the air inlet. The cloth bonding apparatus 1 controls the intake and exhaust of compressed air to the air inlet. A position of a piston, which is inside a main body of the third air cylinder 105, moves in the up-down direction in accordance with the control of the air intake and exhaust. A movable portion 58 is connected to the piston. Thus, when the piston moves, the movable portion 58 moves in the up-down direction. The movable portion 58 can come into contact with the link portion 108.

A bar-shaped stopper 107 is provided below the fourth arm portion 114. The stopper 107 extends upward from the support bed 4. The stopper 107 is provided with a stopper screw that is screwed into an upper end of the stopper 107. By changing a screwed-in amount of the stopper screw, a length of the stopper 107 in the up-down direction can be changed. The stopper 107 can come into contact with a rear end portion of the fourth arm portion 114.

As shown in FIG. 7, the spring 106 is provided in front of the stopper 107. A lower end portion of the spring 106 is connected to the support bed 4. An upper end of the spring 106 is connected to a right side surface of the fourth arm portion 114, in a substantially central portion of the fourth arm portion 114 in the front-rear direction. The spring 106 pulls down the fourth arm portion 114. The pulley support portion 100 can swing about the rotating shaft 141 as the axis. The first arm portion 102 and the third arm portion 112 move upward due to an urging force of the spring 106. As a result, the second pulley 28 moves upward.

As shown in FIG. 8, part of the belt 27 protrudes slightly in the upward direction from the hole 26 (refer to FIG. 2) of the bed portion 11. The movable portion 58 can be moved in the up-down direction to adjust a swing amount of the pulley support portion 100. The length of stopper 107 in the up-down direction can be changed to adjust the swing amount of the pulley support portion 100. The movable portion 58 and the stopper 107 can thus adjust a movement amount of a front portion of the belt 27 in the upward direction. In other words, the movable portion 58 and the stopper 107 can set a second position, which will be described later.

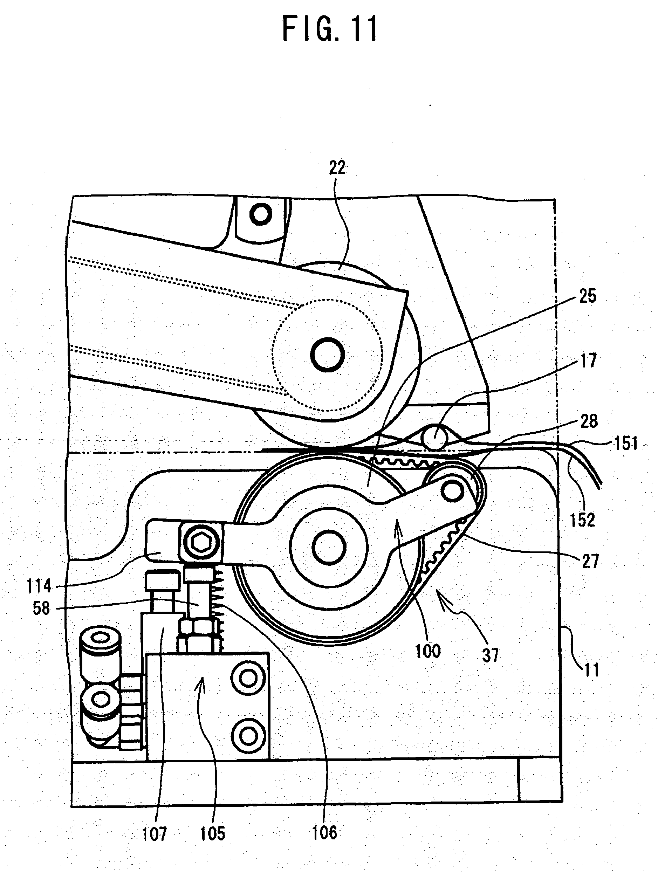

A state of the vicinity of the first roller 22 and the lower feed portion 37 at the time of the bonding operation will be described with reference to FIG. 10 and FIG. 11. FIG. 10 shows the lower feed portion 37 in a first position. FIG. 11 shows the lower feed portion 37 in the second position. In the first position, the movable portion 58 of the third air cylinder 105 is in a position in which it has moved in the downward direction, and thus the front portion of the belt 27 is in a position in which it has moved in the upward direction. The first position is a position in which the belt 27 and the nozzle 17 clamp the lower cloth 152. In the second position, the movable portion 58 of the third air cylinder 105 is in a position in which it has moved in the upward direction, and thus the front portion of the belt 27 is in a position in which it has moved in the downward direction. The second position is a position in which the belt 27 is separated further from the nozzle 17 than in the first position. When the belt 27 is in the second position, the lower cloth 152 is separated from the nozzle 17.

An electrical configuration of the cloth bonding apparatus 1 will be described with reference to FIG. 12. The cloth bonding apparatus 1 is provided with the CPU 200, a ROM 201, a RAM 202 and a storage device 203. the CPU 200 performs reception processing and control processing. The reception processing is processing that receives input information from the keys 209 and the pedal 208 or the like. The control processing is processing that controls the motors and the like,

The ROM 201 stores programs to be executed by the CPU 200 and various initial setting parameters etc. The RAM 202 temporarily stores data including a timer value, a counter value, flags, and so on. The storage device 203 stores various setting information input by the operator. The storage device 203 stores a first predetermined time period to an eighth predetermined time period, which will be described later. The operator can operate the keys 209 to set the first to eighth predetermined time periods.

The CPU 200 is electrically connected to each of the ROM 201, the RAM 202 and the storage device 203, and can access each of their storage areas.

The pedal 208 is electrically connected to the CPU 200. The pedal 208 receives commands, such as a supply command or a supply stop command for the adhesive, and a feed command or a feed stop command for the cloth. When the operator steps down on the pedal 208, namely, when the pedal 208 is in a depressed state, the pedal 208 receives the supply command for the adhesive and the feed command for the cloth. When the operator stops stepping down on the pedal 208, namely, when the state of the pedal 208 changes from the depressed state to a non-depressed state, the pedal 208 receives the supply stop command for the adhesive and the feed stop command for the cloth. The CPU 200 recognizes the command that is received by the pedal 208 in accordance with the state of the pedal 208. The operator may also uses the pedal 208 to adjust the feed speed of the cloth. The CPU 200 recognizes an amount of depression of the pedal 208. The CPU 200 determines rotational speeds of the first roller 22 and of the first pulley 25, and a rotational speed of the drive gear 122, based on the recognized amount of depression of the pedal 208.

The keys 209 are electrically connected to the CPU 200. The operator may use the keys 209 when performing various operation settings. The CPU 200 recognizes a state of depression of the keys 209. The CPU 200 stores information of the various operation settings in the storage device 203, based on the recognized state of depression of the keys 209.

A display driver 205 is electrically connected to the CPU 200. The display driver 205 is electrically connected to the liquid crystal display portion 207. The CPU 200 displays desired information on the liquid crystal display portion 207 via the display driver 205.

A motor driver 206 is electrically connected to the CPU 200. The first to third motors 91 to 93 are each electrically connected to the motor driver 206. The CPU 200 controls each of the first to third motors 91 to 93 via the motor driver 206.

An air driver 204 is electrically connected to the CPU 200. The air driver 204 is electrically connected to the first to third air cylinders 21, 24 and 105, and to the valve opening/closing cylinder 49. Via the air driver 204, the CPU 200 controls a pressure of air fed into the air inlets of the first to third air cylinders 21, 24 and 105, and of the valve opening/closing cylinder 49. The first roller 22 moves in the up-down direction in accordance with the operation of the first air cylinder 21. The support portion 16 moves to a use position and to a maintenance position in accordance with the operation of the second air cylinder 24. The second pulley 28 moves in the up-down direction in accordance with the operation of the third air cylinder 105. The valve 55 moves in the up-down direction in accordance with the operation of the valve opening/closing cylinder 49.

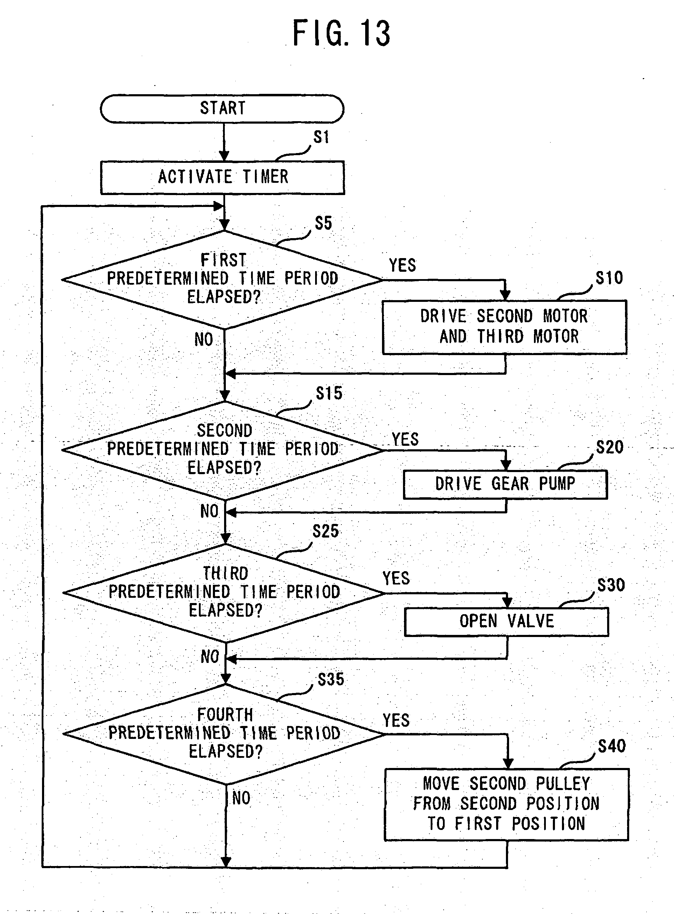

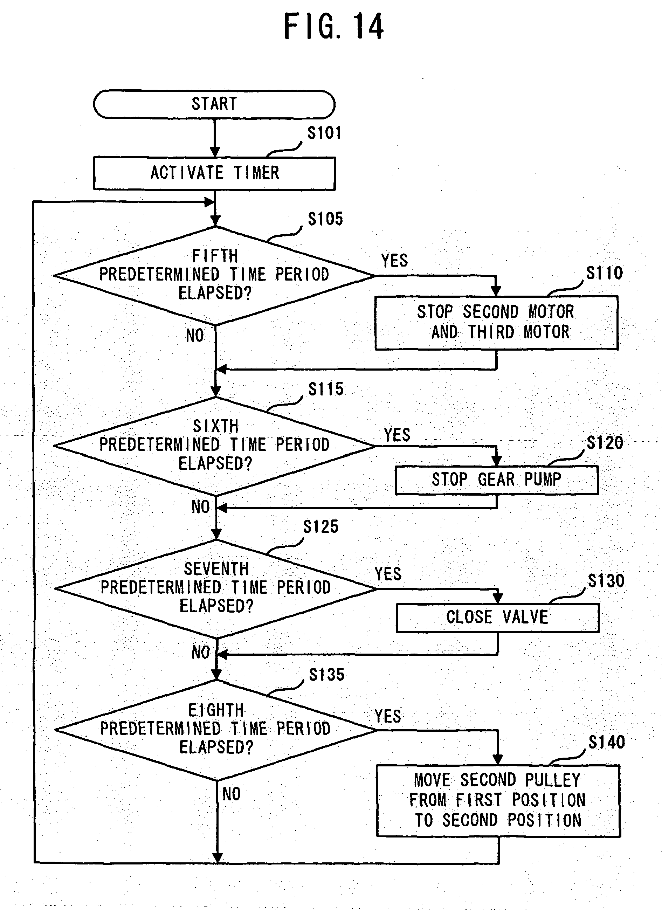

Cloth bonding processing will be described with reference to FIG. 13 and FIG. 14. FIG. 13 is a flowchart of interrupt processing that is started by the CPU 200 when the CPU 200 detects that the operator has depressed the pedal 208, namely, when the pedal 208 has received the supply command for the adhesive and the feed command for the cloth. FIG. 14 is a flowchart of interrupt processing that is started by the CPU 200 when the CPU 200 detects that the operator has stopped operation of the pedal 208, namely, when the pedal 208 has received the supply stop command for the adhesive and the feed stop command for the cloth.

When the processing shown in FIG. 13 is started, the CPU 200 activates a timer (step S1). The timer measures an elapsed time from when the pedal 208 receives the supply command for the adhesive and the feed command for the cloth. The CPU 200 determines whether or not the first predetermined time period has elapsed from the activation of the timer (step S5). The first predetermined time period is a wait time from when the operator depresses the pedal 208 to when the feeding of the cloth is started, and is, for example, 0.1 second from the activation of the timer. In a case where the CPU 200 determines that the first predetermined time period has elapsed from the activation of the timer (yes at step S5), the CPU 200 drives the second motor 92 and the third motor 93 via the motor driver 206 and thus feeds the cloth (step S10). The processing shifts to step S15.

After the processing at step S10 or in a case where the CPU 200 determines that the first predetermined time period has not elapsed from the activation of the timer (no at step S5), the CPU 200 determines whether or not the second predetermined time period has elapsed since the activation of the timer (step S15). The second predetermined time period is a wait time from when the operator depresses the pedal 208 to when the gear pump 124 is operated. In a case where the CPU 200 determines that the second predetermined time period has elapsed from the activation of the timer (yes at step S15), the CPU 200 drives the first motor 91 via the motor driver 206 and thus operates the gear pump 124 (step S20). The gear pump 124 supplies the adhesive to the nozzle 17. The processing shifts to step S25.

After the processing at step S20 or in a case where the CPU 200 determines that the second predetermined time period has not elapsed from the activation of the timer (no at step S15), the CPU 200 determines whether or not the third predetermined time period has elapsed since the activation of the timer (step S25). The third predetermined time period is a wait time from when the operator depresses the pedal 208 to when the valve 55 is opened. In a case where the CPU 200 determines that the third predetermined time period has elapsed from the activation of the timer (yes at step S25), the CPU 200 drives the valve opening/closing cylinder 49 via the air driver 204 and opens the valve 55 (step S30). The processing shifts to step S35.

After the processing at step S30 or in a case where the CPU 200 determines that the third predetermined time period has not elapsed from the activation of the timer (no at step S25), the CPU 200 determines whether or not the fourth predetermined time period has elapsed since the activation of the timer (stop S35). The fourth predetermined time period is a wait time from when the operator depresses the pedal 208 to when the second pulley 28 is moved from the second position to the first position. In a case where the CPU 200 determines that the fourth predetermined time period has elapsed from the activation of the timer (yes at step S35), the CPU 200 drives the third air cylinder 105 via the air driver 204 and moves the second pulley 28 from the second position to the first position (step S40). The processing shifts to step S5. In a case where the CPU 200 determines that the fourth predetermined time period has not elapsed from the activation of the timer (no at step S35), the processing returns to step S5. The processing shown in FIG. 13 ends when it is detected by the CPU 200 that the operator has stopped the operation of the pedal 208.

When the processing shown in FIG. 14 is started, the CPU 200 activates the timer (step S101). The timer measures an elapsed time from when the pedal 208 receives the supply stop command for the adhesive and the feed stop command for the cloth. The CPU 200 determines whether or not the fifth predetermined time period has elapsed from the activation of the timer (step S105). The fifth predetermined time period is a wait time from when the operator stops the operation of the pedal 208 to when the feeding of the cloth is stopped. In a case where the CPU 200 determines that the fifth predetermined time period has clapsed from the activation of the timer (yes at step S105), the CPU 200 stops the second motor 92 and the third motor 93 via the motor driver 206 and thus stops the feeding of the cloth (step S110). The processing shifts to step S115.

After the processing at step S110 or in a case where the CPU 200 determines that the fifth predetermined time period has not elapsed from the activation of the timer (no at step S105), the CPU 200 determines whether or not the sixth predetermined time period has elapsed since the activation of the timer (step S115). The sixth predetermined time period is a wait time from when the operator stops the operation of the pedal 208 to when the gear pump 124 is stopped, and is, for example, 0.03 second from the activation of the timer. In a case where the CPU 200 determines that the sixth predetermined time period has elapsed from the activation of the timer (yes at step S115), the CPU 200 stops the first motor 91 via the motor driver 206 and thus stops the gear pump 124 (step S120). The processing shifts to step S125.

After the processing at step S120 or in a case where the CPU 200 determines that the sixth predetermined time period has not elapsed from the activation of the timer (no at step S115), the CPU 200 determines whether or not the seventh predetermined time period has elapsed since the activation of the timer (step S125). The seventh predetermined time period is a wait time from when the operator stops the operation of the pedal 208 to when the valve 55 is closed, and is, for example, 0.1 second from the activation of the timer. in a case where the CPU 200 determines that the seventh predetermined time period has elapsed from the activation of the timer (yes at step S125), the CPU 200 drives the valve opening/closing cylinder 49 via the air driver 204 and closes the valve 55 (step S130). The processing shifts to step S135.

After the processing at step S130 or in a case where the CPU 200 determines that the seventh predetermined time period has not elapsed from the activation of the timer (no at step S125), the CPU 200 determines whether or not the eighth predetermined time period has elapsed since the activation of the timer (step S135). The eighth predetermined time period is a wait time from when the operator stops the operation of the pedal 208 to when the second pulley 28 is moved from the first position to the second position. In a case where the CPU 200 determines that the eighth predetermined time period has clapsed from the activation of the timer (yes at step S135), the CPU 200 drives the third air cylinder 105 via the air driver 204 and moves the second pulley 28 from the first position to the second position (step S140). The processing shifts to step S105. In a case where the CPU 200 determines that the eighth predetermined time period has not elapsed from the activation of the timer (no at step S135), the processing returns to step S105. The processing shown in FIG. 14 ends when it is detected by the CPU 200 that the operator has depressed the pedal 208.

As described above, with the cloth bonding apparatus 1 according to the first embodiment, when the operator stops the operation of the pedal 208, the CPU 200 drives the third air cylinder 105 and moves the second pulley 28 from the first position to the second position. When the second pulley 28 moves to the second position, the gap between the lower cloth 152 and the nozzle 17 becomes wider. In other words, when the bonding operation is stopped, a space opens between the lower cloth 152 and the nozzle 17, and thus the adhesive that is attached to the rear portion of the nozzle 17 and that does not contact the cloth (hereinafter referred to as "the adhesive before attachment to the cloth") can move to a portion of the nozzle 17 that comes into contact with the cloth. Thus, the cloth bonding apparatus 1 can inhibit the adhesive that is attached to the rear of the nozzle 17 from attaching to the cloth and forming a pooled adhesive section. Thus, when the bonding operation is re-started, the cloth bonding apparatus 1 can inhibit the amount of adhesive that attaches to the cloth from being uneven.

When the operator depresses the pedal 208, the CPU 200 drives the third air cylinder 105 and moves the second pulley 28 from the second position to the first position. When the second pulley 28 moves to the first position, the belt 27 and the nozzle 17 clamp the lower cloth 152. Thus, the cloth bonding apparatus 1 can start the bonding operation by applying to the cloth the adhesive that has moved to the lower portion of the nozzle 17 when the second pulley 28 moved to the second position.

The roller holding portion 20 and the first roller 22 correspond to a first feed portion of the present invention. The lower feed portion 37 corresponds to a second feed portion of the present invention. The supply passages 81 and 82, the first motor 91, the drive gear 122, the driven gear 123 and the gear pump 124 correspond to a supply portion of the present invention. The pedal 208 corresponds to an input portion of the present invention. The third air cylinder 105 corresponds to a position movement portion of the present invention. The CPU 200 that performs the processing at step S40 and step S 140 corresponds to a position movement control portion of the present invention.

The stopper 107 and the movable portion 58 correspond to a position setting portion of the present invention. The CPU 200 that performs the processing at step S101 corresponds to a measurement portion of the present invention. The keys 209 correspond to a time setting portion of the present invention.

### Second embodiment

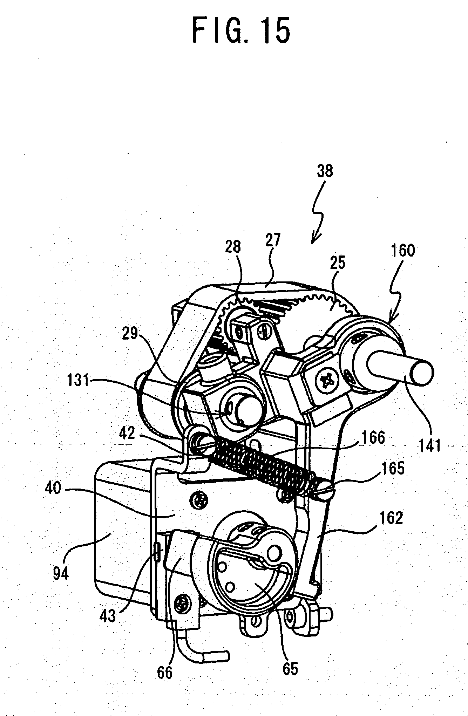

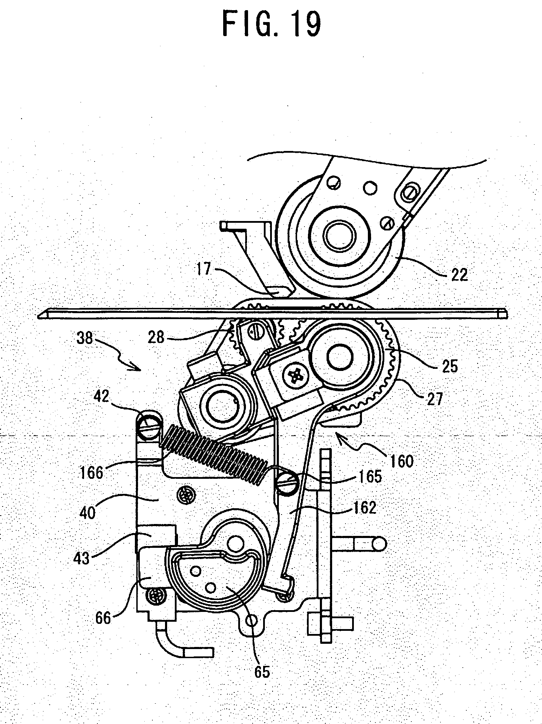

The cloth bonding apparatus 1 of a second embodiment will be described with reference to FIG. 15 to FIG. 21. The left side, the right side, a front surface side, and a back surface side of FIG. 19 respectively correspond to the front side, the rear side, the right side and the left side of a lower feed portion 38 and the cloth bonding apparatus 1.IIcreinafter, the same reference numerals are assigned to portions that are substantially the same as those of the first embodiment and an explanation thereof is omitted or simplified.

The lower feed portion 38 will be described with reference to FIG. 15 to FIG. 18. The lower feed portion 38 includes the first pulley 25, the second pulley 28, a third pulley 29, a support arm 160, the belt 27 and a spring 166. The support arm 160 includes a support plate 161 that extends in the left-right direction, and a contact portion 162 that extends in the downward direction from a right end portion of the support plate 161. The left end portion of the support plate 161 includes a ring portion 171 that protrudes to the rear, a ring portion 172 that protrudes in the upward direction, and a ring portion 173 that protrudes to the front. The right end portion of the support plate 161 includes a ring portion 175 that protrudes in the upward direction and a ring portion 176 that protrudes to the front. The contact portion 162 includes a ring portion 174 that protrudes to the rear of the upper end portion of the contact portion 162. The ring portions 171 to 176 each have a circular plate shape and have a hole in a center portion.

The rotating shaft 141 of the first pulley 25 is inserted via bearings through the holes in the center portions of the ring portions 171 and 174. The first pulley 25 is positioned between the ring portion 171 and the ring portion 174. The rotating shaft of the second pulley 28 is inserted through the holes in the center portions of the ring portions 172 and 175 and is fixed. The second pulley 28 is positioned between the ring portion 172 and the ring portion 175. The second pulley 28 can rotate around the rotating shaft. A rotating shaft 131 of the third pulley 29 is inserted through the holes in the center portions of the ring portions 173 and 176. The rotating shaft 131 can rotate with respect to the ring portion 173 and the ring portion 176.

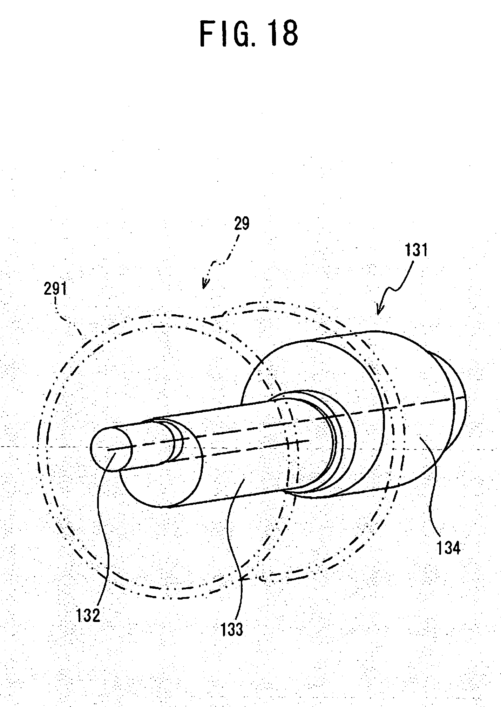

As shown in FIG. 18, the rotating shaft 131 includes a small diameter portion 132, an eccentric portion 133 and a large diameter portion 134. The small diameter portion 132 is inserted through the hole in the center portion of the ring portion 173. The eccentric portion 133 is positioned between the ring portion 173 and the ring portion 176. A shaft center of the eccentric portion 133 is displaced from a shaft center of the small diameter portion 132. The large diameter portion 134 is inserted through the hole in the center portion of the ring portion 176. A shaft center of the large diameter portion 134 is substantially the same as the shaft center of the small diameter portion 132.

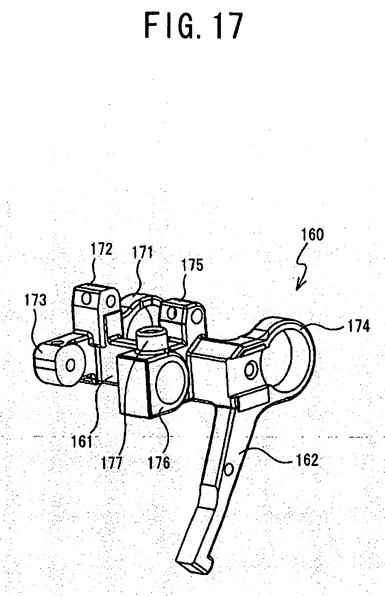

The rotating shaft 131 is inserted from the ring portion 176 side. The ring portion 176 is provided with a thread portion 177 (refer to FIG. 17) that protrudes in the upward direction. The thread portion 177 penetrates through to the hole in the center portion of the ring portion 176. The large diameter portion 134 comes into contact with a leading end portion of a screw (not shown in the drawings) that is screwed into the thread portion 177. Thus, the rotating shaft 131 can be fixed to the support arm 160. The third pulley 29 is attached to the eccentric portion 133 via a bearing (not shown in the drawings). The third pulley 29 can rotate with respect to the eccentric portion 133.

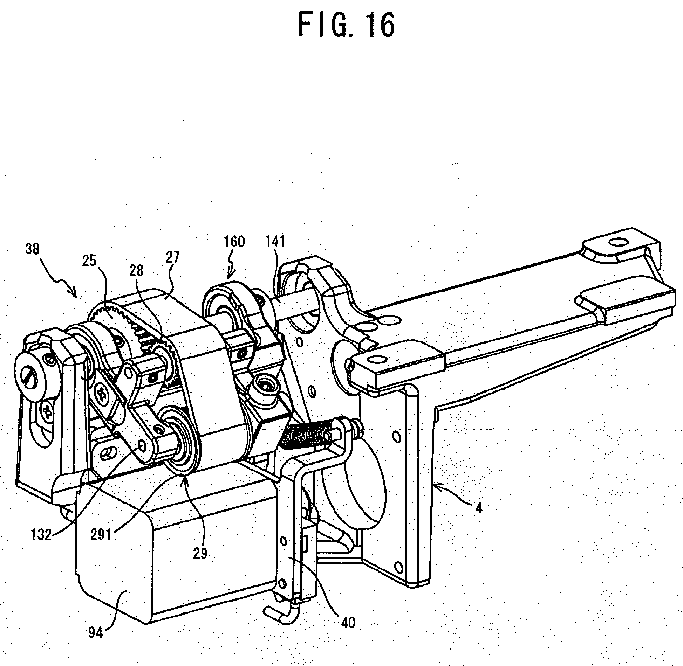

The third pulley 29 is cylindrically shaped. As shown in FIG. 16 and FIG. 18, the third pulley 29 has flanges 291 on both end portions in the axial direction. The third pulley 29 is positioned lower than a plane that includes the rotating shaft 141 (more specifically, the shaft center) of the first pulley 25 and the rotating shaft (more specifically, the shaft center) of the second pulley 28. The third pulley 29 is positioned diagonally below and to the front of the second pulley 28. The second pulley 28 is positioned between the third pulley 29 and the first pulley 25. The belt 27 is stretched over the first pulley 25, the second pulley 28 and the third pulley 29. The belt 27 rotates in accordance with the rotation of the first pulley 25. A height of the flanges 291 (a length of protrusion from an outer peripheral surface of the third pulley 29) is greater than a thickness of the belt 27. Therefore, the flanges 291 can inhibit the belt 27 from slipping off the third pulley 29.

By rotating the rotating shaft 131 when the screw of the thread portion 177 is loosened, an attachment position of the third pulley 29 on the support arm 160 can be changed. By fastening the screw of the thread portion 177 in a state in which the attachment position has been changed, the position of the third pulley 29 relative to the first pulley 25 and the second pulley 28 can be changed. By changing the position of the third pulley 29 relative to the first pulley 25 and the second pulley 28, it is possible to change a tension that is applied to the belt 27.

A spring attachment portion 165 is provided in a substantially center portion in the up-down direction of the contact portion 162. A frame 40 that is provided on the support bed 4 (refer to FIG. 5) includes a spring attachment portion 42. One end of the spring 166 is connected to the spring attachment portion 165 and the other end of the spring is connected to the spring attachment portion 42. The spring 166 constantly urges the support arm 160 in the clockwise direction shown in FIG. 19, with the rotating shaft 141 as the center. More specifically, the spring 166 urges the second pulley 28 in the direction of the first position.

The fourth motor 94 is a step motor and is provided below the belt 27. The fourth motor 94 is fixed to the frame 40. An eccentric cam 65 is fixed to an output shaft of the fourth motor 94. The eccentric cam 65 is a substantially cylindrically shaped member that has a rotational center in a position that is displaced from the center of a circular plate. The contact portion 162 can come into contact with an arc-shaped outer peripheral portion of the eccentric cam 65. The contact portion 162 is constantly in contact with the eccentric cam 65 due to the urging force of the spring 166. The eccentric cam 65 rotates in the clockwise direction and the counter-clockwise direction shown in FIG. 19, in accordance with the normal rotation and reverse rotation of the fourth motor 94. The contact portion 162 moves in the front-rear direction in accordance with the rotation of the eccentric cam 65. The support arm 160 swings, with the rotating shaft 141 as the center, in accordance with the movement of the contact portion 162. The second pulley 28 and the third pulley 29 move in the up-down direction in accordance with the swinging of the support arm 160. The second pulley 28 and the third pulley 29 are in an uppermost position when a distance between a center of rotation of the eccentric cam 65 and a contact position of the contact portion 162 is at a minimum. The second pulley 28 and the third pulley 29 move downward as the above-described distance becomes larger. The belt 27 moves along with the second pulley 28 and the third pulley 29.

A position detection sensor 43 is fixed on the frame 40. The eccentric cam 65 is provided with a detection plate 66 on the outer periphery of the eccentric cam 65 in a position that is at a maximum distance from the center of rotation of the eccentric cam 65. By detecting the detection plate 66, the position detection sensor 43 can detect a predetermined angular position of the fourth motor 94.

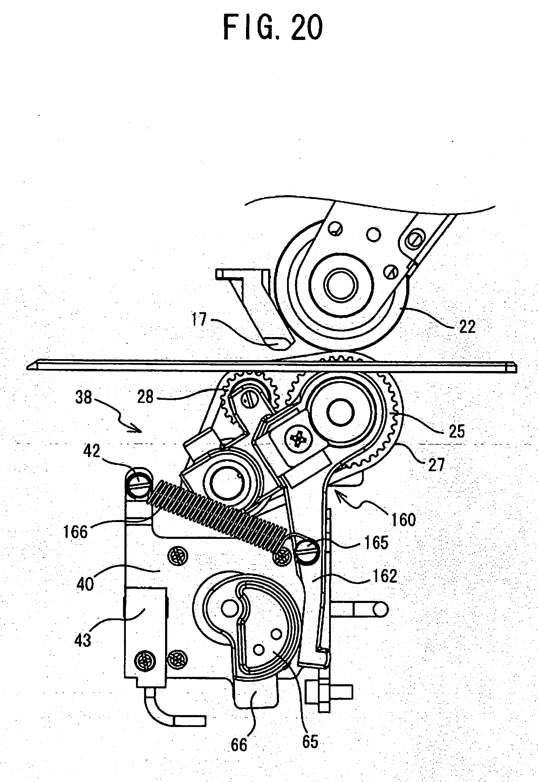

A state in the vicinity of the lower feed portion 38 at the time of the bonding operation will be described with reference to FIG. 19 and FIG. 20. FIG. 19 shows the lower feed portion 38 in a first position. FIG. 20 shows the lower feed portion 38 in a second position. In the first position, the contact portion 162 has moved to the front due to the urging force of the spring 166. When the contact portion 162 moves to the front, the front portion of the belt 27 moves in the upward direction. In the first position, the belt 27 and the nozzle 17 clamp the lower cloth.

When the fourth motor 94 rotates from the first position in the counter-clockwise direction shown in FIG. 19, the contact portion 162 moves to the rear, as shown in FIG. 20. Along with the movement of the contact portion 162 to the rear, the support arm 160 swings in the counter-clockwise direction shown in FIG. 20, with the rotating shaft 141 as the center. The front portion of the belt 27 moves in the downward direction in accordance with the swinging of the support arm 160. Specifically, the belt 27 moves to the second position that is separated further from the nozzle 17 than the first position.

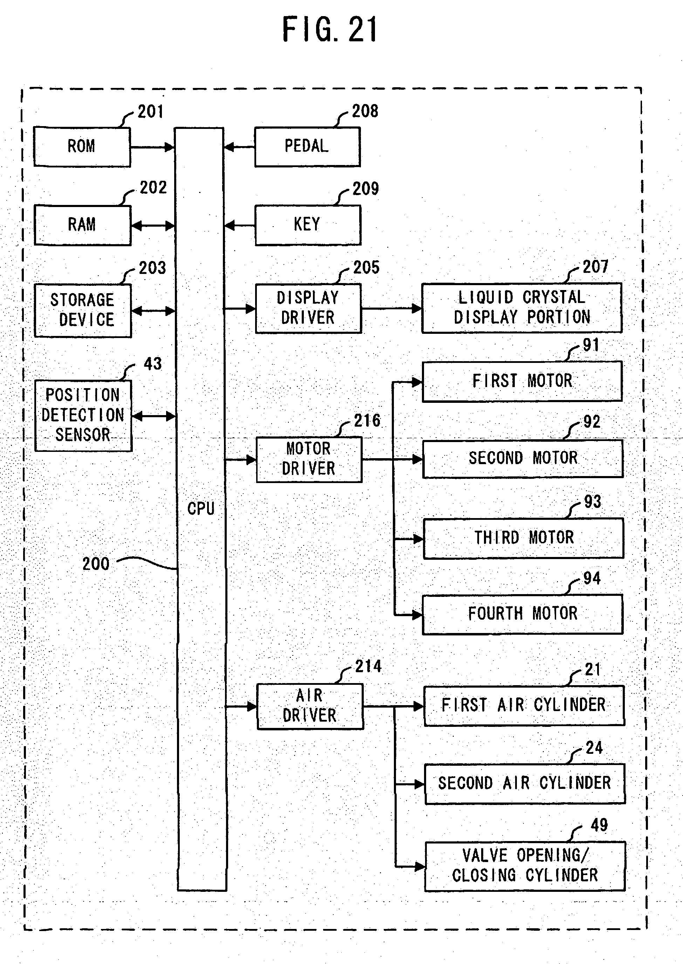

An electrical configuration of the cloth bonding apparatus 1 according to the second embodiment will be described with reference to FIG. 21. The cloth bonding apparatus 1 includes the CPU 200, the ROM 201, the RAM 202 and the storage device 203. The storage device 203 stores a rotation drive amounts from an original position of the fourth motor 94 corresponding to the positions of the second pulley 28. The storage device 203 stores the first position and the second position of the second pulley 28. The storage device 203 can store a plurality of the first positions of the second pulley 28. By operating the keys 209, the operator can set the first position and the second position of the second pulley 28.

The operator operates the keys 209 when switching from one of the first positions to another of the first positions, from among the plurality of first positions of the second pulley 28. Each time the operator depresses the keys 209, the keys 209 sequentially select one of the plurality of first positions stored by the storage device 203 and switch to the selected first position. The CPU 200 recognizes the selected first position and controls movement of the second pulley 28 to the selected first position by controlling the driving of the fourth motor 94 via a motor driver 216. In a case where the thickness of the cloth is changed during bonding, the operator may change the first position of the second pulley 28 by operating the keys 209. By changing the first position of the second pulley 28 in accordance with a change in the thickness of the cloth during bonding, the cloth bonding apparatus 1 can adjust the gap between the cloth and the nozzle 17. By this process, the cloth bonding apparatus 1 can apply the adhesive to the cloth in a uniform manner.

The motor driver 216 is electrically connected to the CPU 200. The first to fourth motors 91 to 94 are each electrically connected to the motor driver 216. The CPU 200 controls the first to fourth motors 91 to 94 via the motor driver 216.

The position detection sensor 43 is electrically connected to the CPU 200. The CPU 200 recognizes whether or not the position detection sensor 43 has detected the detection plate 66. The CPU 200 controls movement of the fourth motor 94 such that it is in the original position based on a detection result of the position detection sensor 43. The CPU 200 inputs to the motor driver 216 a signal of a drive amount for moving the second pulley 28 from the original position of the fourth motor 94 to the first position or the second position. By inputting the signal to the motor driver 216, the CPU 200 controls the driving of the fourth motor 94 and thus controls the movement of the second pulley 28.

An air driver 214 is electrically connected to the CPU 200. The air driver 214 is electrically connected to the first and second air cylinders 21 and 24, and to the valve opening/closing cylinder 49. Via the air driver 214, the CPU 200 controls pressure of air fed into the air inlets of the first and second air cylinders 21 and 24 and of the valve opening/closing cylinder 49.

As described above, in the cloth bonding apparatus 1 according to the second embodiment, the eccentric cam 65, which rotates in accordance with the rotation of the fourth motor 94, swings the support arm 160. The second pulley 28 moves between the first position and the second position in accordance with the swinging of the support arm 160. The operator can use the keys 209 when setting the first position and the second position of the second pulley 28. Using the fourth motor 94, the cloth bonding apparatus 1 can easily move the second pulley 28 between the first position and the second position and can easily adjust the first position and the second position of the second pulley 28.

The third pulley 29 has the flanges 291 on both the end portions in the axial direction. The belt 27 is stretched over the first pulley 25, the second pulley 28 and the third pulley 29. The flanges 291 can inhibit the belt 27 from slipping off the third pulley 29. The third pulley 29 is provided diagonally below and to the front of the second pulley 28. Thus, the cloth bonding apparatus 1 can inhibit the flanges 291 from coming into contact with the cloth.

The lower feed portion 38 of the second embodiment corresponds to the second feed portion of the present invention. The fourth motor 94 and the eccentric cam 65 correspond to the position movement portion of the present invention. The keys 209 correspond to the position setting portion and a switching portion of the present invention. The storage device 203 corresponds to a position storage portion of the present invention. The support arm 160 corresponds to an arm portion of the present invention. The flanges 291 correspond to flange portions of the present invention.

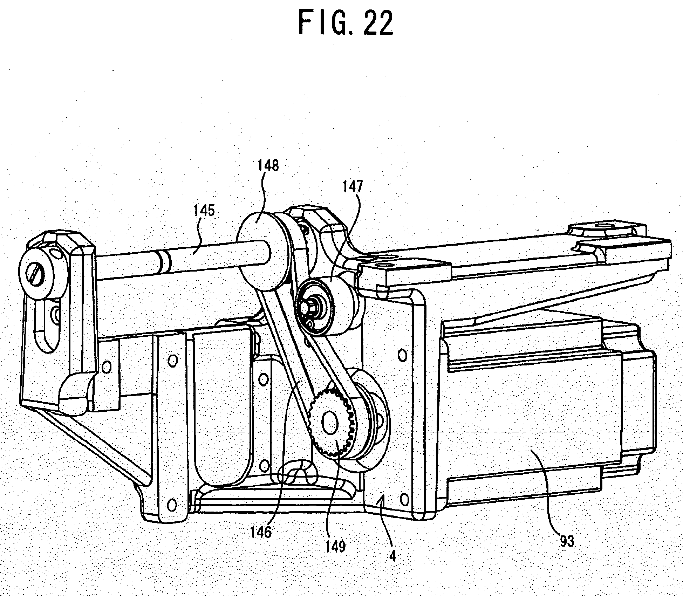

Various modifications can be made in addition to the above-described embodiments of the present invention. For example, as shown in FIG. 22, the third motor 93 may be provided on the support bed 4 that is on the left side inside the bed portion 11 (refer to FIG. 5). The third motor 93 rotates the first pulley 25 (refer to FIG. 5) by transmitting a rotational driving force to the first pulley 25 via a rotating shaft 145 and a belt 146.

The rotating shaft 145 is a rotating shaft of the first pulley 25. The rotating shaft 145 extends in the left-right direction inside the bed portion 11. The support bed 4 supports a right end portion of the rotating shaft 145 via a bearing (not shown in the drawings). The rotating shaft 145 is provided with a pulley 148 on the left side of the bearing. The first pulley 25 (which is omitted in FIG. 22) is positioned on the left side of the pulley 148.

A pulley 149 is provided on a rotating shaft of the third motor 93. The belt 146 is stretched between the pulley 149 and the pulley 148 of the rotating shaft 145. The support bed 4 rotatably supports a pulley 147 between the pulley 149 and the pulley 148. The pulley 147 applies a tension to the belt 146. The first pulley 25 rotates due to the rotation of the third motor 93.

Instead of using the keys 209 to set each of the various predetermined time periods, such as the wait time (the eighth predetermined time period) before the second pulley 28 moves from the first position to the second position, and to set the first position and the second position of the second pulley 28, the settings may be stored in advance in the ROM 201 or in the storage device 203. The values of each of the predetermined time periods exemplified in the embodiments may be changed to other values. The cloth bonding apparatus 1 may move the second pulley 28 from the second position when the pedal 208 receives the supply command for the adhesive and the feed command for the cloth, regardless of the fourth predetermined time period. The cloth bonding apparatus 1 may move the second pulley 28 from the first position when the pedal 208 receives the supply stop command for the adhesive and the feed stop command for the cloth, regardless of the eighth predetermined time period. The cloth bonding apparatus 1 may receive the supply command or the supply stop command, or the feed command or the feed stop command, from the keys 209 or another input portion, instead of from the pedal 208.

With respect to the first embodiment, in a case where a plurality of the first positions of the second pulley 28 arc stored in the storage device 203, by controlling, via the air driver 204, the pressure of the air fed into the third air cylinder 105, the CPU 200 may move the second pulley 28 to a first position selected by an operator using the keys 209, from among the plurality of first positions. Further, the first position of the second pulley 28 may be switched in accordance with a program or the like, instead of being set by an operator using the keys 209.

In the cloth bonding apparatus 1 of the second embodiment, in place of the eccentric cam 65, a cam may be employed that is formed such that a center of rotation is in the center of a circular plate, and a distance from the center of the circular plate to an outer periphery that contacts the contact portion 162 changes.

Both the lower feed portion 37 and the lower feed portion 38 are structured such that the second pulley 28 moves in the up-down direction along the first pulley 25, the second pulley 28 being supported by the pulley support portion 100 or the support arm 160. However, the support structure of the second pulley 28 may be independent of the first pulley 25. The cloth bonding apparatus 1 may move the support structure of the second pulley 28 in the up-down direction and switch between the first position and the second position.

## Claims

1. A cloth bonding apparatus comprising:
a nozzle (17) through which an adhesive is dischargeable onto a cloth (151, 152);
a first feed portion (20, 22) that is adapted to feed the cloth and that is disposed on a downstream side with respect to the nozzle in a feed direction of the cloth;
a second feed portion (37, 38) that is adapted to feed the cloth and that is disposed on a first surface side of the cloth and in a position facing the nozzle such that the cloth is disposed between the second feed portion and the nozzle, the first surface side being opposite to a second surface side of the cloth on which the first feed portion is disposed with respect to the cloth;
a supply portion (81, 82, 91, 122, 123, 124) that is adapted to supply the adhesive to the nozzle;
an input portion (208) that is adapted to receive a driving command and a driving stop command for the supply portion, and a feed command and a feed stop command for the cloth; and
a position movement portion (105, 94, 65) that moves the second feed portion between a first position in which the cloth is clamped between the second feed portion and the nozzle, and a second position in which the second feed portion is further separated from the nozzle than in the first position,
**characterized by**
a position movement control portion (200) that, in a case where the input portion receives the driving stop command and the feed stop command, moves the second feed portion from the first position to the second position by controlling driving of the position movement portion.

2. The cloth bonding apparatus according to claim 1, wherein
the position movement control portion moves the second feed portion from the second position to the first position by controlling the driving of the position movement portion, in a case where the input portion receives the driving command and the feed command.

3. The cloth bonding apparatus according to claim 1 or 2, further comprising:
a position setting portion (107, 58, 209) that sets the first position and the second position.

4. The cloth bonding apparatus according to claim 3, further comprising:
a position storage portion (203) that stores a plurality of the first positions set by the position setting portion (209); and
a switching portion (209) that switches from one of the first positions that is currently selected from among the plurality of first positions stored in the position storage portion to another of the first positions;
wherein
in a case where the switching portion switches the first position, the position movement control portion moves the second feed portion to the first position switched to by the switching portion, by controlling the driving of the position movement portion.

5. The cloth bonding apparatus according to any one of claims 1 through 4, further comprising:
a measurement portion (200) that measures an elapsed time period from when the input portion receives the driving stop command and the feed stop command; and
a time setting portion (209) that sets a wait time from when the input portion receives the driving stop command and the feed stop command to when the position movement portion moves the second feed portion from the first position to the second position; wherein
when the elapsed time period has reached the wait time, the position movement control portion moves the second feed portion from the first position to the second position by controlling the position movement portion.

6. The cloth bonding apparatus according to any one of claims 1 through 5, wherein
the first feed portion is a cylindrically shaped first roller (22),
the second feed portion includes
a first pulley (25) that is disposed in a position facing the first roller such that the cloth is disposed between the first pulley and the first roller,
a second pulley (28) that is disposed in one of a position facing the nozzle such that the cloth is disposed between the second pulley and the nozzle, and a position that is at least on an upstream side in the feed direction of the cloth from the position facing the nozzle such that the cloth is disposed between the second pulley and the nozzle, and
a belt (27) that is stretched between the first pulley and the second pulley, and
the position movement portion moves the position of the second pulley between the first position in which the cloth is clamped between the belt and the nozzle, and the second position in which the belt is further separated from the nozzle than in the first position.

7. The cloth bonding apparatus according to claim 6, wherein
the second feed portion further includes
an arm portion (160) that rotatably supports the first pulley and the second pulley and that is swingable about a rotational axis of the first pulley,
the position movement portion includes
a motor (94), and
an eccentric cam (65) that is provided on an output shaft of the motor and that contacts the arm portion, and
the motor moves the second pulley between the first position and the second position by swinging the arm portion that contacts the eccentric cam.

8. The cloth bonding apparatus according to claim 6 or 7, wherein
the second feed portion further includes a third pulley (29) over which the belt is stretched,
the third pulley includes flange portions (291) on both end portions in an axial direction and is positioned lower than a plane that includes the rotational axis of the first pulley and a rotational axis of the second pulley, and
the flange portions are separated from the cloth.

## Patentansprüche

1. Tuchfügegerät mit:
einer Düse (17), durch die ein Klebemittel auf ein Tuch (151, 152) ausgelassen werden kann;
einem ersten Vorschubabschnitt (20, 22), der daran angepasst ist, das Tuch vorzuschieben, und der an einer stromabwärtigen Seite hinsichtlich der Düse in einer Vorschubrichtung des Tuchs angeordnet ist;
einem zweiten Vorschubabschnitt (37, 38), der daran angepasst ist, das Tuch vorzuschieben, und der an einer ersten Flächenseite des Tuchs und an einer Position angeordnet ist, die der Düse derart zugewandt ist, dass das Tuch zwischen dem zweiten Vorschubabschnitt und der Düse angeordnet ist, wobei die erste Flächenseite einer zweiten Flächenseite des Tuchs gegenüberliegt, 1 an der der erste Vorschubabschnitt hinsichtlich des Tuchs angeordnet ist;
einem Zuführabschnitt (81, 82, 91, 122, 123, 124), der daran angepasst ist, das Klebemittel zu der Düse zuzuführen;
einem Eingabeabschnitt (208), der daran angepasst ist, einen Antriebsbefehl und einen Antriebsstoppbefehl für den Zuführabschnitt sowie einen Vorschubbefehl und einen Vorschubstoppbefehl für das Tuch aufzunehmen; und
einem Positionsbewegungsabschnitt (105, 94, 65), der den zweiten Vorschubabschnitt zwischen einer ersten Position, an der das Tuch zwischen dem zweiten Vorschubabschnitt und der Düse geklemmt ist, und einer zweiten Position bewegt, an der der zweite Vorschubabschnitt von der Düse weiter entfernt ist als an der ersten Position,
**gekennzeichnet durch**
einen Positionsbewegungssteuerabschnitt (200), der den zweiten Vorschubabschnitt von der ersten Position zu der zweiten Position **durch** Steuern eines Antriebs des Positionsbewegungsabschnitts bewegt, falls der Eingabeabschnitt den Antriebsstoppbefehl und den Vorschubstoppbefehl aufnimmt.

2. Tuchfügegerät gemäß Anspruch 1, wobei
der Positionsbewegungssteuerabschnitt den zweiten Vorschubabschnitt von der zweiten Position zu der ersten Position durch Steuern des Antriebs des Positionsbewegungsabschnitts bewegt, falls der Eingabeabschnitt den Antriebsbefehl und den Vorschubbefehl aufnimmt.

3. Tuchfügegerät gemäß Anspruch 1 oder 2, des Weiteren mit:
einem Positionsfestlegungsabschnitt (107, 58, 209), der die erste Position und die zweite Position festlegt.

4. Tuchfügegerät gemäß Anspruch 3, des Weiteren mit:
einem Positionsspeicherabschnitt (203), der viele der ersten Positionen speichert, die durch den Positionsfestlegungsabschnitt (209) festgelegt sind; und
einem Schaltabschnitt (209), der von einer der ersten Positionen, die aus den vielen in dem Positionsspeicherabschnitt gespeicherten ersten Positionen gegenwärtig ausgewählt wird, zu einer anderen der ersten Positionen schaltet; wobei
falls der Schaltabschnitt die erste Position schaltet, bewegt der Positionsbewegungssteuerabschnitt den zweiten Vorschubabschnitt zu der ersten Position, die durch den Schaltabschnitt geschaltet wurde, indem der Antrieb des Positionsbewegungsabschnitts gesteuert wird.

5. Tuchfügegerät gemäß einem der Ansprüche 1 bis 4, des Weiteren mit:
einem Messabschnitt (200), der eine verstrichene Zeitperiode nach der Aufnahme des Antriebsstoppbefehls und des Vorschubstoppbefehls durch den Eingabeabschnitt misst; und
einem Zeitfestlegungsabschnitt (209), der eine Wartezeit nach der Aufnahme des Antriebsstoppbefehls und des Vorschubstoppbefehls durch den Eingabeabschnitt bis zur Bewegung des zweiten Vorschubabschnitts von der ersten Position zu der zweiten Position durch den Positionsbewegungsabschnitt festlegt; wobei
wenn die verstrichene Zeitperiode die Wartezeit erreicht hat, bewegt der Positionsbewegungssteuerabschnitt den zweiten Vorschubabschnitt von der ersten Position zu der zweiten Position durch Steuern des Positionsbewegungsabschnitts.

6. Tuchfügegerät gemäß einem der Ansprüche 1 bis 5, wobei
der erste Vorschubabschnitt eine zylindrisch geformte, erste Walze (22) ist,
der zweite Vorschubabschnitt Folgendes aufweist:
eine erste Riemenscheibe (25), die an einer Position angeordnet ist, die der ersten Walze derart zugewandt ist, dass das Tuch zwischen der ersten Riemenscheibe und der ersten Walze angeordnet ist,
eine zweite Riemenscheibe (28), die entweder an einer Position, die der Düse derart zugewandt ist, dass das Tuch zwischen der zweiten Riemenscheibe und der Düse angeordnet ist, oder einer Position angeordnet ist, die zumindest an einer stromaufwärtigen Seite in der Vorschubrichtung des Tuchs von der Position ist, die der Düse derart zugewandt ist, dass das Tuch zwischen der zweiten Riemenscheibe und der Düse angeordnet ist, und
einen Riemen (27), der zwischen der ersten Riemenscheibe und der zweiten Riemenscheibe gespannt ist, und
wobei der Positionsbewegungsabschnitt die Position der zweiten Riemenscheibe zwischen der ersten Position, an der das Tuch zwischen dem Riemen und der Düse geklemmt ist, und der zweiten Position bewegt, an der der Riemen von der Düse weiter entfernt ist als an der ersten Position.

7. Tuchfügegerät gemäß Anspruch 6, wobei
der zweite Vorschubabschnitt des Weiteren Folgendes aufweist:
einen Armabschnitt (160), der die erste Riemenscheibe und die zweite Riemenscheibe drehbar stützt und der um eine Drehachse der ersten Riemenscheibe schwenkbar ist,
wobei der Positionsbewegungsabschnitt Folgendes aufweist:
einen Motor (94), und
einen exzentrischen Nocken (65), der an einer Abgabewelle des Motors vorgesehen ist und mit dem Armabschnitt in Kontakt ist, und
wobei der Motor die zweite Riemenscheibe zwischen der ersten Position und der zweiten Position durch Schwenken des Armabschnitts bewegt, der mit dem exzentrischen Nocken in Kontakt ist.

8. Tuchfügegerät gemäß Anspruch 6 oder 7, wobei
der zweite Vorschubabschnitt des Weiteren eine dritte Riemenscheibe (29) aufweist, über der der Riemen gespannt ist,
wobei die dritte Riemenscheibe Flanschabschnitte (291) an beiden Endabschnitten in einer axialen Richtung aufweist und unter einer Ebene positioniert ist, die die Drehachse der ersten Riemenscheibe und eine Drehachse der zweiten Riemenscheibe enthält, und
wobei die Flanschabschnitte von dem Tuch getrennt sind.

## Revendications

1. Dispositif de soudage de tissu comprenant :
un injecteur (17) au moyen duquel un adhésif peut être déposé sur un tissu (151, 152) ;
une première partie d'alimentation (20, 22) qui est adaptée de manière à délivrer le tissu et qui est disposée sur un côté aval par rapport à l'injecteur, suivant une direction d'alimentation du tissu ;
une seconde partie d'alimentation (37, 38) qui est adaptée de manière à délivrer le tissu et qui est disposée sur une première face du tissu et dans une position faisant face à l'injecteur de telle sorte que le tissu est disposé entre la seconde partie d'alimentation et l'injecteur, la première face étant opposée à une seconde face du tissu sur laquelle la première partie d'alimentation est disposée par rapport au tissu ;
une partie d'alimentation (81, 82, 91, 122, 123, 124) qui est adaptée afin de délivrer l'adhésif à l'injecteur ;
une partie d'entrée (208) qui est adaptée de manière à recevoir une instruction d'entraînement et une instruction d'arrêt d'entraînement pour la partie d'alimentation, et une instruction d'alimentation et une instruction d'arrêt d'alimentation pour le tissu ; et
une partie de changement de position (105, 94, 65) qui déplace la seconde partie d'alimentation entre une première position dans laquelle le tissu est bloqué entre la seconde partie d'alimentation et l'injecteur, et une seconde position dans laquelle la seconde partie d'alimentation est davantage séparée de l'injecteur que dans la première position ;
**caractérisé par** :
une partie de commande de changement de position (200) qui, dans un cas dans lequel la partie d'entrée reçoit l'instruction d'arrêt d'entraînement et l'instruction d'arrêt d'alimentation, déplace la seconde partie d'alimentation depuis la première position vers la seconde position en commandant l'entraînement de la partie de changement de position.

2. Dispositif de soudage de tissu selon la revendication 1, dans lequel
la partie de commande de changement de position déplace la seconde partie d'alimentation depuis la seconde position vers la première position en commandant l'entraînement de la partie de changement de position, dans un cas dans lequel la partie d'entrée reçoit l'instruction d'entraînement et l'instruction d'alimentation.

3. Dispositif de soudage de tissu selon la revendication 1 ou 2, comprenant en outre :
une partie de définition de position (107, 58, 209) qui définit la première position et la seconde position.

4. Dispositif de soudage de tissu selon la revendication 3, comprenant en outre :
une partie de stockage de position (203) qui mémorise une pluralité de premières positions définies par la partie de définition de position (209) ; et
une partie de commutation (209) qui commute à partir de l'une des premières positions qui est couramment sélectionnée parmi la pluralité des premières positions mémorisées dans la partie de mémorisation de position vers une autre des premières positions ;
dans lequel,
un cas dans lequel la partie de commutation commute la première position, la partie de commande de changement de position déplace la seconde partie d'alimentation vers la première position commutée par la partie de commutation, en commandant l'entraînement de la partie de changement de position.

5. Dispositif de soudage de tissu selon l'une quelconque des revendications 1 à 4, comprenant en outre :
une partie de mesure (200) qui mesure une durée écoulée à partir du moment où la partie d'entrée reçoit l'instruction d'arrêt d'entraînement et l'instruction d'arrêt d'alimentation ; et
une partie de définition de temps (209) qui définit une durée d'attente à partir du moment où la partie d'entrée reçoit l'instruction d'arrêt d'entraînement et l'instruction d'arrêt d'alimentation jusqu'au moment où la partie de changement de position déplace la seconde partie d'alimentation depuis la première position vers la seconde position ; dans lequel,
lorsque la durée écoulée a atteint la durée d'attente, la partie de commande de changement de position déplace la seconde partie d'alimentation depuis la première position vers la seconde position en commandant la partie de changement de position.

6. Dispositif de soudage de tissu selon l'une quelconque des revendications 1 à 5, dans lequel
la première partie d'alimentation est un premier rouleau de forme cylindrique (22),
la seconde partie d'alimentation comporte :
une première poulie (25) qui est disposée dans une position faisant face au premier rouleau de telle sorte que le tissu est disposé entre la première poulie et le premier rouleau,
une deuxième poulie (28) qui est disposée dans l'une d'une position faisant face à l'injecteur de telle sorte que le tissu est disposé entre la deuxième poulie et l'injecteur, et d'une position qui est au moins sur un côté amont suivant la direction d'alimentation du tissu par rapport à la position faisant face à l'injecteur de telle sorte que le tissu est disposé entre la deuxième poulie et l'injecteur, et
une courroie (27) qui est tendue entre la première poulie et la deuxième poulie, et
la partie de changement de position déplace la position de la deuxième poulie entre la première position dans laquelle le tissu est bloqué entre la courroie et l'injecteur, et la seconde position dans laquelle la courroie est davantage séparée de l'injecteur que dans la première position.

7. Dispositif de soudage de tissu selon la revendication 6, dans lequel
la seconde partie d'alimentation, comporte en outre :
une partie de bras (160) qui supporte avec possibilité de rotation la première poulie et la deuxième poulie et qui peut basculer autour d'un axe de rotation de la première poulie,
la partie de changement de position comporte :
un moteur (94), et
une came excentrique (65) qui est agencée sur un arbre de sortie du moteur et qui est en contact avec la partie de bras, et
le moteur déplace la deuxième poulie entre la première position et la seconde position en faisant basculer la partie de bras qui est en contact avec la came excentrique.

8. Dispositif de soudage de tissu selon la revendication 6 ou 7, dans lequel
la seconde partie d'alimentation comporte en outre une troisième poulie (29) sur laquelle la courroie est tendue,
la troisième poulie comporte des parties en collerette (291) sur les deux parties d'extrémités suivant une direction axiale et est positionnée au-dessous d'un plan qui comporte l'axe de rotation de la première poulie et un axe de rotation de la deuxième poulie, et
les parties en collerette sont séparées du tissu.
